# EUROPEAN PATENT SPECIFICATION

(11) **EP 4 479 927 B1**
(45) Date of publication and mention of the grant of the patent: **01.04.2026**
(21) Application number: 23711274.3
(22) Date of filing: 17.02.2023
(51) Int. Cl.: G06T 5/60

(54) **AI-DRIVEN SIGNAL ENHANCEMENT OF SEQUENCING IMAGES**
AI-GESTEUERTE SIGNALVERBESSERUNG VON SEQUENZIERUNGSBILDERN
AMÉLIORATION DE SIGNAL D'IMAGES DE SÉQUENÇAGE PILOTÉE PAR IA

(30) Priority: 17.02.2022 US 202263311427 P
(43) Date of publication of application: 25.12.2024
(73) Proprietor: Illumina, Inc., San Diego, CA 92122 (US)
(72) Inventor: DUTTA, Anindita, San Diego, California 92122 (US); GALLASPY, Michael, San Diego, Pennsylvania 92122 (US); GAU, Jeffrey, San Diego, California 92122 (US); HONG, Stanley, San Diego, California 92122 (US); KARUNAKARAN, Aathavan, San Diego, California 92122 (US); PRINCE, Simon, San Diego, California 92122 (US); SIU, Merek, San Diego, California 92122 (US); WANG, Yina, San Diego, California 92122 (US); VERMA, Rishi, San Diego, California 92122 (US)
(74) Representative: Robinson, David Edward Ashdown
(86) International application number: PCT/US2023/013318
(87) International publication number: WO 2023/158804

(56) References cited:
- WO-A1-2021/108732
- WANG HONGDA ET AL: "Deep learning enables cross-modality super-resolution in fluorescence microscopy", NATURE METHODS, vol. 16, no. 1, 17 December 2018 (2018-12-17), New York, pages 103 - 110, XP093000928, ISSN: 1548-7091, DOI: 10.1038/s41592-018-0239-0
- JIN LUHONG ET AL: "Deep learning enables structured illumination microscopy with low light levels and enhanced speed", NATURE COMMUNICATIONS, vol. 11, no. 1, 2020, pages 1 - 7, XP093050264, DOI: 10.1038/s41467-020-15784-x

## Description

### REFERENCES

Reference is made to the following:
U.S. Patent No. 10,423,861, titled "DEEP LEARNING-BASED TECHNIQUES FOR TRAINING DEEP CONVOLUTIONAL NEURAL NETWORKS," issued September 24, 2019, applicant Illumina, Inc.;
U.S. Patent No. 10,152,776, titled "OPTICAL DISTORTION CORRECTION FOR IMAGED SAMPLES," issued December 11, 2018, applicant Illumina, Inc.;
U.S. Patent No. 9,512,422, titled "GEL PATTERNED SURFACES," issued December 6, 2016, applicant Illumina, Inc.;
U.S. Patent No. 9,193,996, titled "INTEGRATED OPTOELECTRONIC READ HEAD AND FLUIDIC CARTRIDGE USEFUL FOR NUCLEIC ACID SEQUENCING," issued November 24, 2015, applicant Illumina, Inc.;
U.S. Patent No. 8,158,926, titled "CONFOCAL IMAGING METHODS AND APPARATUS," issued April 17, 2012, to Illumina, Inc.;
PCT Application WO 2021/055857A1, titled "ARTIFICIAL INTELLIGENCE-BASED EPIGENETICS," published March 25, 2021, applicant Illumina, Inc.;
U.S. Provisional Patent Application No. 63/228,954, titled "BASE CALLING USING MULTIPLE BASE CALLER MODELS," filed 20 August 2021 (Attorney Docket No. ILLM 1021-1/IP-1856-PRV);
Chen, Yu-Sheng, Yu-Ching Wang, Man-Hsin Kao, and Yung-Yu Chuang. "Deep Photo Enhancer: Unpaired Learning for Image Enhancement From Photographs With GANs," 6306-14, 2018, (https://)openaccess.thecvf.com/content_cvpr_2018/html/Chen_Deep_Photo_Enhancer_CVPR_2 018_paper.html;
Tran, Phong, Anh Tran, Quynh Phung, and Minh Hoai. "Explore Image Deblurring via Blur Kernel Space." ArXiv:2104.00317 [Cs], April 3, 2021, (http://)arxiv.org/abs/2104.00317;
Arjovsky, Martin, Soumith Chintala, and Léon Bottou. "Wasserstein GAN." ArXiv:1701.07875 [Cs, Stat], December 6, 2017, (http://)arxiv.org/abs/1701.07875;
Gulrajani, Ishaan, Faruk Ahmed, Martin Arjovsky, Vincent Dumoulin, and Aaron Courville. "Improved Training of Wasserstein GANs." ArXiv:1704.00028 [Cs, Stat], December 25, 2017, (http://)arxiv.org/abs/1704.00028;
Wang, H. et al. Deep learning enables cross-modality super-resolution in fluorescence microscopy. Nat Methods 16, 103-110 (2019);
Jin, L. et al. Deep learning enables structured illumination microscopy with low light levels and enhanced speed. Nat Commun 11, 1934 (2020);
Jin, L. et al. Deep learning extended depth-of-field microscope for fast and slide-free histology. Proc Natl Acad Sci USA 117, 33051-33060 (2020);
Ouyang, W., Aristov, A., Lelek, M., Hao, X. & Zimmer, C. Deep learning massively accelerates super-resolution localization microscopy. Nat Biotechnol 36, 460-468 (2018);
Lehtinen, J. et al. Noise2Noise: Learning Image Restoration without Clean Data. arXiv:1803.04189 [cs, stat] (2018);
Krull, A., Buchholz, T.-O. & Jug, F. Noise2Void - Learning Denoising From Single Noisy Images. in 2019 IEEE/CVF Conference on Computer Vision and Pattern Recognition (CVPR) 2124-2132 (IEEE, 2019), (https://)doi.org/10.1109/CVPR.2019.00223;
Chen, H. et al. Pre-Trained Image Processing Transformer. 12. (https://)openaccess.thecvf.com/content/CVPR2021/papers/Chen_Pre-Trained_Image_Processing_Transformer_CVPR_2021_paper.pdf;
Yang, F., Yang, H., Fu, J., Lu, H. & Guo, B. Learning Texture Transformer Network for Image Super-Resolution. in 2020 IEEE/CVF Conference on Computer Vision and Pattern Recognition (CVPR) 5790-5799 (IEEE, 2020), (https://)doi.org/10.1109/CVPR42600.2020.00583;
Wang, Z., Bovik, A. C., Sheikh, H. R. & Simoncelli, E. P. Image Quality Assessment: From Error Visibility to Structural Similarity. IEEE Trans. on Image Process. 13, 600-612 (2004);
Johnson, J., Alahi, A. & Fei-Fei, L. Perceptual Losses for Real-Time Style Transfer and Super-Resolution. arXiv:1603.08155 [cs] (2016);
Brownlee, J., A Tour of Generative Adversarial Network Models, July 12, 2019, (https://)machinelearningmastery.com/tour-of-generative-adversarial-network-models/;
Fernandes, Dsouza, Dsouza, and Meher, "Low-Light Image Enhancement Using Generative Adversarial Networks," International Research Journal of Engineering and Technology (IRJET), June 2021, pp. 755-758 Volume: 8 Issue: 6;
Aqsa Rashid, Muhammad Khurrum Rahim, "Extensive Experimental Analysis of Image Statistical Measures for Image Processing Appliances," International Journal of Signal Processing, Image Processing and Pattern Recognition, Vol.9, No.3 (2016), pp.49-60, (http://)dx.doi.org/10.14257/ijsip.2016.9.3.05;
Activation function - Wikipedia, (https://)en.wikipedihttps://en.wikipedia.org/wiki/Activation_functiona.org/wiki/Activation_func tion - 1/17/2022, 10:38 AM;
Transformer (machine learning model) - Wikipedia, (https://)en.wikipedia.org/wiki/Transformer_(machine_learning_model) - 1/21/2022, 1:42PM;
Illumina Sequencing Technology, (https://)www.illumina.com/documents/products/techspotlights/techspotlight_sequencing.pdf 1/18/2022, 10:30AM;
Isola, P., Zhu, J.-Y., Zhou, T., and Efros, A. A., "Image-to-Image Translation with Conditional Adversarial Networks," 26 Nov 2018, arXiv:1611.07004 [cs], (https://)arxiv.org/pdf/1611.07004.pdf (Isola et al.); and
Zhu, Jun-Yan, Taesung Park, Phillip Isola, and Alexei A. Efros, "Unpaired Image-To-Image Translation Using Cycle-Consistent Adversarial Networks," 24 Aug 2020, arXiv:1703.10593v7 [cs.CV], (https://)arxiv.org/pdf/1703.10593v7.pdf (Zhu et al.).

### BACKGROUND

The subject matter discussed in this section should not be assumed to be prior art merely because of its mention in this section. Similarly, a problem mentioned in this section or associated with the subject matter provided as background should not be assumed to have been previously recognized in the prior art. The subject matter in this section merely represents different approaches, which in and of themselves can also correspond to implementations of the claimed technology.

The technology disclosed relates to optic sensing methodologies and systems for determining structures associated with a biological sample, including nucleic acid materials (DNA, RNA), proteins, and polypeptides. The read data and analysis produced by these methodologies and systems are useful for many purposes, including diagnosis and treatment of diseases. Techniques are disclosed that enable any one or more of: improving performance, improving accuracy, and/or reducing cost of sequencing.

Sequencing by synthesis is a parallel technique for determining genetic sequences and operates on a multitude of oligonucleotides (sometimes referred to as oligos) of the sample at once, one base position at a time for each of the oligos in parallel. Some implementations of sequencing by synthesis operate by cloning oligos on a substrate, such as a slide and/or a flow cell, e.g., arranged in multiple lanes and imaged as respective tiles in each lane. In some implementations, the cloning is arranged to preferentially clone each of a plurality of starting oligos into a respective cluster of oligos, such as in a respective nanowell of a patterned flow cell.

The sequencing by synthesis proceeds in a series of sequencing cycles, sometimes referred to simply as cycles. In each of the sequencing cycles, there are chemical, image capture, and base calling actions. The results of the actions are a determined base (e.g., for DNA, one of the four bases adenine (A), guanine (G), thymine (T), and cytosine (C)) for each of the oligos in parallel. The chemical actions are designed to add one complementary nucleotide with a fluorescent label (sometimes referred to as a fluorophore) to each clone (e.g., oligo) in each cluster in each cycle. The image capture actions generally align an imager (e.g., camera) with respect to a tile of a lane of a flow cell, illuminate the tile (e.g., with one or more lasers) to stimulate fluorescence of the fluorophores, and capture a plurality of images of the fluorescence (e.g., one to four images each corresponding to the tile and each of a distinct wavelength). The base calling actions result in identification of the determined base (e.g., one of A, G, T, and C) for each oligo in parallel. In some implementations, the image capture actions correspond to discrete point-and-shoot operation, e.g., the imager and the flow cell are moved with respect to each other and then image capture actions are performed for a tile. In some implementations, the image capture actions correspond to continuous scanning operation, e.g., the imager and the flow cell are in continuous movement with respect to each other and image capture is performed during the movement. In various continuous scanning implementations, a tile corresponds to any contiguous region of a sample.

Some implementations of sequencing by synthesis use fluorescently labeled nucleotides, such as a fluorescently labeled deoxyribonucleoside triphosphate (dNTP), as fluorophores. During each sequencing cycle, a single fluorophore is added to each of the oligos in parallel. An excitation source, such as a laser, stimulates fluorescence of many of the fluorophores in parallel, and the fluorescing fluorophores are imaged in parallel via one or more imaging operations. When imaging of the fluorophores added in the sequencing cycle is complete, the fluorophores added in the sequencing cycle are removed and/or inactivated, and sequencing proceeds to a next sequencing cycle. During the next sequencing cycle, a next single fluorophore is added to each of the oligos in parallel, the excitation source stimulates parallel fluorescence of many of the fluorophores added in the next sequencing cycle, and the fluorescing fluorophores are imaged in parallel via one or more imaging operations. The sequencing cycles are repeated as needed, based on how many bases are in the oligos and/or other termination conditions.

In some implementations of sequencing by synthesis, the excitation source remains active as the fluorophores are imaged. In various scenarios, energy from the excitation source cumulatively damages the oligos. In some situations, the damage to the oligos leads to errors in determining the genetic sequences, and consequently reduced performance, reduced accuracy, and/or increased cost of the sequencing by synthesis. For example, the damage to the oligos leads to a high error rate for one of the sequencing cycles. In response, the sequencing cycle is repeated, resulting in increased operating time, and thus reduced performance and/or increased cost. For another example, the damage to the oligos leads to errors that are not detected, resulting in a decrease in accuracy.

In some implementations of sequencing by synthesis, cost of the excitation source is dependent on power output of the excitation source. For example, a sequencing by synthesis system implemented with a relatively higher-power output excitation source results in relatively increased cost.

Therefore, what is needed is improved sequencing by synthesis that enables any one or more of: improving performance, improving accuracy, and/or reducing cost.

WO 2021/108732 A1 describes a method of training a machine learning model for an image based assay and a method for converting an assay image using a machine learning model. Wang, H. et al, Deep learning enables cross-modality super-resolution in fluorescence microscopy, Nat Methods 16, 103-110 (2019), describes deep-learning-enabled super-resolution across different fluorescence microscopy modalities. Jin, L. et al, Deep learning enables structured illumination microscopy with low light levels and enhanced speed, Nat Commun 11, 1934 (2020), describes deep learning assisted structured illumination microscopy.

### SUMMARY

The technology disclosed relates to AI-driven signal enhancement of sequencing images taken on a optical sequencing system, such as a detection of bases through fluorescent labels or other labels or reporters.

Particular aspects of the technology disclosed are described in the claims, specification, and drawings. According to one aspect of the disclosure, there is provided a method of reducing excitation power used to produce fluorescence and collected images during sequencing, as defined by claim 1. Further embodiments are provided as defined by the dependent claims.

Artificial intelligence driven signal enhancement of sequencing images enables enhanced sequencing that determines a sequence of bases in genetic material with any one or more of: improved performance, improved accuracy, and/or reduced cost. A training set of images taken at unreduced and reduced power levels used to excite fluorescence during sequencing is used to train a neural network to enable the neural network to recover enhanced images, as if taken at the unreduced power level, from unenhanced images taken at the reduced power level.

### BRIEF DESCRIPTION OF THE DRAWINGS

The patent or application file contains at least one drawing executed in color. Copies of this patent or patent application publication with color drawing(s) will be provided by the Office upon request and payment of the necessary fee. The color drawings also may be available in PAIR via the Supplemental Content tab.
**FIG. 1** illustrates an example of AI-driven signal enhancement of sequencing images.
**FIG. 2** illustrates example images taken at low (reduced) power, high (unreduced) power, and enhanced images produced by AI-driven signal enhancement from images taken at the low (reduced) power.
**FIG. 3** illustrates generally elements for imaging flow cells, as well as example opportunities for flow cell image improvement, enhancement, refinement, and/or other operations such as to enable improved base calling during sequencing by synthesis.
**FIG. 4** illustrates AI-driven signal enhancement of sequencing images using a Conditional Generative Adversarial Network (CGAN) having a U-Net-based generator stage and a patch-based discriminator stage.
**FIG. 5** illustrates AI-driven signal enhancement of sequencing images using an autoencoder having an encoder stage and a decoder stage.
**FIG. 6** illustrates AI-driven signal enhancement of sequencing images using a cycle-consistent GAN.
**FIG. 7A** illustrates paired image collection using laser excitation power titration.
**FIG. 7B** illustrates paired image collection using an acousto-optic tunable filter to attenuate laser power.
**FIG. 7C** illustrates paired image collection using exposure time titration to effectively alter image collection power.
**FIG. 7D** illustrates paired image collection using a variable attenuator to effectively alter image collection power.
**FIG. 8** illustrates a procedure for paired image synthesis using synthetic data generation to produce images in accordance with unreduced power and reduced power.
**FIGS. 9A-C** collectively illustrate various sequencing image collection techniques for a sample.
**FIG. 10** illustrates various sequencing image channel chemistry techniques.
**FIG. 11** illustrates two sample rates of paired image collection in a respective series of image cycles in a sequencing run.
**FIG. 12** is a block diagram of an example computer system.
**FIG. 13** illustrates training and production elements implementing AI-driven signal enhancement of sequencing images.
**FIG. 14A** illustrates fiducial examples.
**FIG. 14B** illustrates an example cross-correlation equation for discrete functions.
**FIG. 14C** illustrates an example scoring equation.
**FIG. 15** illustrates a training procedure specific to production instruments, beginning with training on a laboratory instrument.
**FIG. 16** illustrates a training procedure for a specific production instrument, optionally responsive to a recalibration requirement detection.
**FIG. 17** illustrates a procedure that implements an ensemble of AI models, one for each of a plurality of sequencing by synthesis cycles.
**FIG. 18** illustrates a procedure for graceful failover from AI-driven enhancement of a reduced power image to an unreduced power image via capturing a long exposure image.
**FIG. 19** illustrates transfer learning from learning with medium quality images to learning with low quality images.
**FIG. 20** illustrates producing enhanced images by capturing multiple images of a same tile with a TDI sub-pixel imager and then processing the multiple images with an AI model.
**FIGS. 21A-C** collectively illustrate example equations relating to loss functions.
**FIG. 22** illustrates a graph of measured Signal-to-Noise (SNR) in blue and green channels over a sequencing run.

### DETAILED DESCRIPTION

The following discussion is presented to enable any person skilled in the art to make and use the technology disclosed and is provided in the context of a particular application and its requirements. Various modifications to the disclosed implementations will be readily apparent to those skilled in the art.

The following detailed description is made with reference to the figures. Example implementations are described to illustrate the technology disclosed, not to limit its scope, which is defined by the claims. In that regard, disclosure of various implementations for use in connection with sequencing-by-synthesis (SBS) for Next Generation Sequencing (NGS) is meant to illustrate the implementations in the context of a well-known and widely-used sequencing technique, and various implementations herein have application to any number of sequencing techniques, including, e.g., real time sequencing; nanopore sequencing; long read sequencing; single-molecule sequencing; stochastic sequencing; amplification-free sequencing; sequencing by ligation; pyrosequencing; and ion semiconductor sequencing.

Those of ordinary skill in the art will recognize a variety of equivalent variations on the description that follows.

### Examples of Selected Terms

An example of Artificial Intelligence (AI) is intelligence as manifested by computer systems. A specific example is the AI-driven signal enhancement of sequencing images for base calling of sequencing. The AI-driven signal enhancement is implemented at least in part, for example, via one or more computer systems implementing and/or based on one or more machine learning techniques such as deep learning using one or more Neural Networks (NNs). Various examples of NNs include Convolutional Neural Networks (CNNs) generally (e.g., any NN having one or more layers performing convolution), as well as NNs having elements that include one or more CNNs and/or CNN-related elements (e.g., one or more convolutional layers), such as various implementations of Generative Adversarial Networks (GANs) generally, as well as various implementations of Conditional Generative Adversarial Networks (CGANs), cycle-consistent Generative Adversarial Networks (CycleGANs), and autoencoders. In various scenarios, any NN having at least one convolutional layer is referred to as a CNN. The various examples of NNs further include transformer-based NNs generally (e.g., any NN having one or more layers performing an attention operation such as a self-attention operation or any other type of attention operation), as well as NNs having elements that include one or more transformers and/or transformer-related elements. The various examples of NNs further include Recurrent Neural Networks (RNNs) generally (e.g., any NN in which output from a previous step is provided as input to a current step and/or having hidden state), as well as NNs having one or more elements related to recurrence. The various examples of NNs further include graph neural networks and diffusion neural networks. The various examples of NNs further include MultiLayer Perceptron (MLP) neural networks. In some implementations, a GAN is implemented at least in part via one or more MLP elements.

Examples of elements of NNs include layers, such as processing, activation, and pooling layers, as well as loss functions and objective functions. According to implementation, functionality corresponding to one or more processing layers, one or more pooling layers, and/or one or more an activation layers is included in layers of a NN. According to implementation, some layers are organized as a processing layer followed by an activation layer and optionally the activation layer is followed by a pooling layer. For example, a processing layer produces layer results via an activation function followed by pooling. Additional example elements of NNs include batch normalization layers, regularization layers, and layers that implement dropout, as well as recurrent connections, residual connections, highway connections, peephole connections, and skip connections. Further additional example elements of NNs include gates and gated memory units, such as Long Short-Term Memory (LSTM) blocks or Gated Recurrent Unit (GRU) blocks, as well as residual and/or attention blocks.

Examples of processing layers include convolutional layers generally, upsampling layers, downsampling layers, averaging layers, and padding layers. Examples of convolutional layers include 1D convolutional layers, 2D convolutional layers, 3D convolutional layers, 4D convolutional layers, 5D convolutional layers, multi-dimensional convolutional layers, single channel convolutional layers, multi-channel convolutional layers, 1 x 1 convolutional layers, atrous convolutional layers, dilated convolutional layers, transpose convolutional layers, depthwise separable convolutional layers, pointwise convolutional layers, 1 x 1 convolutional layers, group convolutional layers, flattened convolutional layers, spatial convolutional layers, spatially separable convolutional layers, cross-channel convolutional layers, shuffled grouped convolutional layers, and pointwise grouped convolutional layers. Convolutional layers vary according to various convolutional layer parameters, for example, kernel size (e.g., field of view of the convolution), stride (e.g., step size of the kernel when traversing an image), padding (e.g., how sample borders are processed), and input and output channels. An example kernel size is 3x3 pixels for a 2D image. An example default stride is one. In various implementations, strides of one or more convolutional layers are larger than unity (e.g., two). A stride larger than unity is usable, for example, to reduce sizes of non-channel dimensions and/or downsampling. A first example of padding (sometimes referred to as 'padded') pads zero values around input boundaries of a convolution so that spatial input and output sizes are equal (e.g., a 5x5 2D input image is processed to a 5x5 2D output image). A second example of padding (sometimes referred to as 'unpadded') includes no padding in a convolution so that spatial output size is smaller than input size (e.g., a 6x6 2D input image is processed to a 4x4 2D output image).

Example activation layers implement, e.g., non-linear functions, such as a rectifying linear unit function (sometimes referred to as ReLU), a leaky rectifying linear unit function (sometimes referred to as a leaky-ReLU), a parametric rectified linear unit (sometimes referred to as a PreLU), a Gaussian Error Linear Unit (GELU) function, a sigmoid linear unit function, a sigmoid shrinkage function, an SiL function, a Swish-1 function, a Mish function, a Gaussian function, a softplus function, a maxout function, an Exponential Linear Unit (ELU) function, a Scaled Exponential Linear Unit (SELU) function, a logistic function, a sigmoid function, a soft step function, a softmax function, a Tangens hyperbolicus function, a tanh function, an arctan function, an ElliotSig/Softsign function, an Inverse Square Root Unit (ISRU) function, an Inverse Square Root Linear Unit (ISRLU) function, and a Square Nonlinearity (SQNL) function.

Examples of pooling layers include maximum pooling layers, minimum pooling layers, average pooling layers, and adaptive pooling layers.

Examples of loss functions include loss functions in accordance with one or more loss terms, such as a logistic regression/log loss, a multi-class cross-entropy/softmax loss, a binary cross-entropy loss, a mean squared error loss, a mean absolute error loss, a mean absolute percentage error loss, a mean squared logarithmic error loss, an L1 loss, an L2 loss, a smooth L1 loss, a Huber loss, a patch-based loss, a pixel-based loss, a pixel-wise loss, a perceptual loss, a Wasserstein loss (sometimes termed an Earth Mover distance loss), and a fiducial-based loss. Additional examples of loss functions include loss functions in accordance one or more image quality metrics, such as a Peak Signal to Noise Ratio (PSNR) metric, a Structural Similarity Index (SSI) (e.g., a technique to take into account local area around a particular pixel and/or used in a patch-based processing context), a Point Spread Function (PSF) such as estimated based on images generally containing approximately point sources (a smaller PSF corresponds to high image quality), a metric of a PSF such as Full Width at Half Maximum (FWHM), and variability in intensities for a single sequencing cycle. Some loss functions are based on comparing intermediary activations of a NN, such as between layers. Some loss functions are based on a spatial domain. Some loss functions are based on a frequency domain.

Example objective functions include maximizing a likelihood, maximizing a log likelihood, maximizing a probability, maximizing a log probability, and minimizing one or error terms (e.g., as determined via one or more loss functions). Further example objective functions include an Evidence Lower Bound Objective (ELBO) function and any objective function based on a Kullback-Leibler (KL) divergence term. According to implementation, a penalty is applied to an objective function. Example penalties applicable to various objective functions include a ridge regression penalty and a lasso regression penalty.

Example techniques to train NNs, such as to determine and/or update parameters of the NNs, include backpropagation-based gradient update and/or gradient descent techniques, such as Stochastic Gradient Descent (SGD), synchronous SGD, asynchronous SGD, batch gradient descent, and mini-batch gradient descent. The backpropagation-based gradient techniques are usable alone or in any combination. E.g., stochastic gradient descent is usable in a mini-batch context. Example optimization techniques usable with, e.g., backpropagation-based gradient techniques (such as gradient update and/or gradient descent techniques) include Momentum, Nesterov accelerated gradient, Adagrad, Adadelta, RMSprop, Adam, AdaMax, Nadam, and AMSGrad.

According to implementation, elements of NNs, such as layers, loss functions, and/or objective functions, variously correspond to one or more hardware elements, one or more software elements, and/or various combinations of hardware elements and software elements. For a first example, a convolution layer, such as a N x M x D convolutional layer, is implemented as hardware logic circuitry comprised in an Application Specific Integrated Circuit (ASIC). For a second example, a plurality of convolutional, activation, and pooling layers are implemented in a TensorFlow machine learning framework on a collection of Internet-connected servers. For a third example, a first one or more portions a NN, such as one or more convolution layers, are respectively implemented in hardware logic circuitry according to the first example, and a second one or more portions of the NN, such as one or more convolutional, activation, and pooling layers, are implemented on a collection of Internet-connected servers according to the second example. Various implementations are contemplated that use various combinations of hardware and software elements to provide corresponding price and performance points.

Example characterizations of a NN architecture include any one or more of topology, interconnection, number, arrangement, dimensionality, size, value, dimensions and/or number of hyperparameters, and dimensions and/or number of parameters of and/or relating to various elements of a NN (e.g., any one or more of layers, loss functions, and/or objective functions of the NN).

Example implementations of a NN architecture include various collections of software and/or hardware elements that collectively perform operations according to the NN architecture. Various NN implementations vary according to machine learning framework, programming language, runtime system, operating system, and underlying hardware resources. The underlying hardware resources variously include one or more computer systems, such as having any combination of Central Processing Units (CPUs), Graphics Processing Units (GPUs), Field Programmable Gate Arrays (FPGAs), Coarse-Grained Reconfigurable Architectures (CGRAs), Application-Specific Integrated Circuits (ASICs), Application Specific Instruction-set Processors (ASIPs), and Digital Signal Processors (DSPs), as well as computing systems generally, e.g., elements enabled to execute programmed instructions specified via programming languages. Various NN implementations are enabled to store programming information (such as code and data) on non-transitory computer readable media and are further enabled to execute the code and reference the data according to programs that implement NN architectures.

Examples of machine learning frameworks, platforms, runtime environments, and/or libraries, such as enabling investigation, development, implementation, and/or deployment of NNs and/or NN-related elements, include TensorFlow, Theano, Torch, PyTorch, Keras, MLpack, MATLAB, IBM Watson Studio, Google Cloud AI Platform, Amazon SageMaker, Google Cloud AutoML, RapidMiner, Azure Machine Learning Studio, Jupyter Notebook, and Oracle Machine Learning.

Examples of programming languages, code and/or data libraries, and/or operating environments usable for machine learning, such as relating to NNs, include Python, Numpy, R, Java, Javascript, C#, C++, Julia, Shell, Go, TypeScript, and Scala.

An example of image collection is using an imager to simultaneously capture light emitted by a plurality of fluorescence-tagged nucleotides as the nucleotides are fluorescing responsive to excitation energy (such as laser excitation energy) as a collected image. The image has one or more dimensions, e.g., a line of pixels or a two-dimensional array of pixels. The pixels are represented according to one or more values. For a first example, each pixel is represented by a single integer (such as an 8-bit integer) that represents intensity of the pixel (such as a greyscale). For a second example, each pixel is represented by a plurality of integers (such as three 24-bit integers) and each of the integers represents intensity of the pixel according to a respective band of wavelengths (such as respective colors).

### AI-Driven Signal Enhancement of Sequencing Images - Example Implementation

In this disclosure, training contexts and production contexts are described. In some implementations, laboratory instruments (sometimes referred to as biological sequencing instruments) are used in the training contexts and production instruments (also sometimes referred to as biological sequencing instruments) are used in the production contexts. In some implementations, laboratory instruments as well as production instruments are used in training contexts. The training contexts and the production contexts implement various NN-related processing (such as one or more NNs directed to implementing AI-driven signal enhancement of sequencing images). In various implementations, all or any portions of the NN-related processing of the training contexts is variously implemented on any one or more of the laboratory instruments, any one or more of the production instruments, and/or any one or more computer systems separate from the laboratory instruments and the production instruments. In various implementations, all or any portions of the NN-related processing of the production contexts is variously implemented on any one or more of the laboratory instruments, any one or more of the production instruments, and/or any one or more computer systems (such as one or more servers) separate from the laboratory instruments and the production instruments. In various implementations, all or any portions of the NN-related processing of the laboratory instruments is performed by one or more computer systems of the laboratory instruments. Similarly, in various implementations, all or any portions of the NN-related processing of the production instruments is performed by one or more computer systems of the production instruments. In various implementations, all or any portions of the laboratory instruments are used primarily for image collection and NN-related processing of associated training contexts is performed on one or more computer systems separate from the laboratory instruments used primarily for image collection.

AI-driven signal enhancement of sequencing images enables enhanced sequencing by synthesis that determines a sequence of bases in genetic material with any one or more of: improved performance, improved accuracy, and/or reduced cost. The sequencing by synthesis proceeds one base at a time in parallel for each of a plurality of oligos attached to all or any portions of a flow cell. Processing of each respective base for the plurality of oligos comprises imaging at a reduced (e.g., low) laser excitation power and using AI-driven signal enhancement for enhancing results of the reduced laser excitation power imaging to recover enhanced images as if taken at an unreduced (e.g., high) laser excitation power. The processing further comprises, based on the enhanced images, identifying the respective bases (e.g., one of A, T, C, and G) via base calling. Results of the base calling across the plurality of oligos are combined into overall sequencing results. Using reduced laser excitation power for the base calling reduces damage (such as bleaching and/or wear-out) to samples being sequenced compared to using unreduced laser excitation power for the base calling. The reduction in damage enables, for example, increased base calling performance and/or accuracy, and/or decreased cost.

An example of AI-driven signal enhancement of sequencing images is using a neural network, such as including one or more convolutional neural networks and/or one or more convolutional layers, to learn information that enables base calling based on imaging performed at a reduced (e.g., low) laser excitation power. The learning is based in part on imaging performed at an unreduced (e.g., high) laser excitation power. In this disclosure, imaging performed at the unreduced laser excitation power is described as producing unreduced power images and is sometimes referred to as imaging at high power, e.g., producing high-power images. In some implementations, the learning is also based in part on imaging performed at a reduced (e.g., low) laser excitation power. In this disclosure, imaging performed at the reduced laser excitation power is described as producing reduced power images and is sometimes referred to as imaging at low power, e.g., producing low-power images.

In various scenarios, AI-driven signal enhancement of sequencing images is based in part on knowledge and insight that the sequencing images comprise one or more glowing fluorophores, and that the glowing fluorophores appear variously in the images as point sources of light, partially overlapping sources of light, self-illuminating sources of light, and/or relatively limited color spectra sources of light. In various scenarios, the glowing fluorophores emit light of overlapping emission spectra (e.g., in implementations using chemistry compatible with a plurality of wavelengths such as 4-channel chemistry). In various scenarios, many (such as a majority, most, or all) of the point sources of light share similar characteristics. The shared similar characteristics include any one or more of imaging the point source in a relatively small contiguous area of an image sensor, representing the point source in an image as a relatively small number of pixels (such as one pixel or two contiguous pixels), and the point sources appearing in the images as having a similar shape. In some scenarios, the images include effects of one or more sources for the stimulating, such as background light and/or illuminating light from one or more lasers lasing at respective wavelengths.

In various scenarios, point sources imaged by an imager such as a camera, are composed of a plurality of smaller, indistinguishable point sources (e.g., individual glowing fluorophores). Errors in sequencing by synthesis (such as chemistry errors and/or energy-induced damage) result in a mixing of fluorophores (such as manifested by phasing and/or pre-phasing) within a cluster or one or more clusters of a nanowell. From the perspective of the imager, the mixed fluorophores appear as a single point source, in some circumstances. In some implementations, effects of the mixing are mitigated by processing information over a plurality of sequencing cycles, e.g., information of individual fluorophores of the mixed fluorophores is disentangled using information from several contiguous sequencing cycles.

Compared to other domains related to point sources (e.g., astronomy), AI-driven signal enhancement of sequencing images is distinguished at least as follows. The point sources described herein are near diffraction limits of laboratory and production instruments and are imaged at approximately a single pixel each. In some implementations, relative spacing between the point sources is prescribed, such as by adjusting spacing between nanowells. The relative spacing (e.g., nanowell pitch) is near the diffraction limits, leading, in some scenarios, to dense images with significant spatial crosstalk between clusters. The point sources herein have a high dynamic intensity range, e.g., to representing either 'on' or 'off' dependent on which base is currently fluorescence-tagged in a cluster. The intensity of the point sources encodes information about the point source, e.g., which base is presently tagged. In some implementations, emission wavelengths of the point sources are used in part to decode information about the point sources (e.g., which of A, G, T, or C does a point source correspond to). The point sources herein (fluorophores) are removably attached to an object of interest, e.g., a particular base of a genetic sample, enabling extending sequencing to a next base of the genetic sample. Information In some scenarios, information over time is relevant, e.g., information from a first sequencing cycle is relevant to a next or later sequencing cycle. Imaging of the point sources herein uses exposure times that are orders of magnitude short than, e.g., astronomy applications. The point sources and/or portions of a corresponding genetic sample are subject to damage by energy used to trigger fluorescence.

Compared to other domains related to naturalistic images (e.g., wildlife photography), AI-driven signal enhancement of sequencing images is distinguished at least as follows. The genetic samples described herein have relatively localized spatial interactions, e.g., on the order of a dozen pixels, but in contrast, an image of an animal is, e.g., on the order of hundreds or thousands of pixels. The genetic samples lack feature hierarchy; however, an image of an animal is divisible into a hierarchy of elements, e.g., body parts (limbs, body, and head), in turn the head is divisible into smaller elements (ears, eyes, and nose), and the nose into fur and skin. Processing of the genetic samples described herein is with respect to specific emission wavelengths, and some implementations filter out non-desirable wavelengths; in contrast, naturalistic images contain all visible wavelengths and omit non-visible wavelengths. Further, the processing is with respect to a restricted type of scene, e.g., a flow cell.

Other distinguishing characteristics are as follows. It is not possible to repeat imaging of a genetic sample once discarded, at least because flow cell seeding is a stochastic process. Genetic sample images include distinguishable points of reference (e.g., landmarks) such as fiducials located at pre-determined locations. Some implementations are based on flow cells having multiple surfaces, necessitating capturing corresponding images for each of the multiple surfaces.

In this disclosure, some effects are related in part to power (energy per unit time) and some effects are related in part to energy (power integrated over time). For example, some sample damage effects are related to power and some sample damage effects are related to energy. Generally, this disclosure uses the term 'power' as indicative of energy per unit time, such that a laser source with a relatively higher power is understood to effect a relatively higher amount of power-induced damage as well as to effect a relatively higher amount of energy-induced damage. Compared to implementations that lack reduced power imaging, some implementations that use reduced power imaging reduce power for a sequencing run, and thus reduce energy-induced damage.

Various implementations of NNs are usable for AI-driven signal enhancement. For example, NNs variously implemented with any one or more of a Generative Adversarial Network (GAN), a Conditional GAN (CGAN), an autoencoder (e.g., encoder/decoder), a cycle-consistent GAN (CycleGAN), a Transformer, and various types of CNNs alone and/or in combination with one or more Transformers are usable for AI-driven signal enhancement. Various implementation technologies of NNs are usable for AI-driven signal enhancement. For example, NNs implemented wholly or in part via software executing on processors, NNs implemented wholly or in part via purpose-built hardware, as well as NNs implemented using techniques combining software and hardware are usable for AI-driven signal enhancement.

Some implementations of AI-driven signal enhancement of sequencing images are based on supervised training (e.g., directed to an autoencoder or some variations of a GAN), using so-called paired images. An example of a paired image is a pair of images of a same sample area (such as a same tile of a same flow cell). Thus, each of the images of a pair of images is of a same target sample of genetic material (e.g., gDNA, cDNA, RNA clusters). One image of the pair is a reduced power image, and the other image of the pair is an unreduced power image. Some implementations of AI-driven signal enhancement of sequencing images are based on unsupervised training (e.g., directed to a CycleGAN or some other variations of a GAN), using so-called unpaired images. An example of unpaired images is a collection of two sets of images. One of the sets is a set of reduced power images (such as of tiles of a first flow cell) and the other one of the sets is a set of unreduced power images (such as of tiles of a second flow cell). There is no necessary relationship between sample areas imaged for the two sets. In some circumstances, the AI-driven signal enhancement of sequencing images corresponds to increasing Signal to Noise Ratio (SNR) with respect to information usable for base calling.

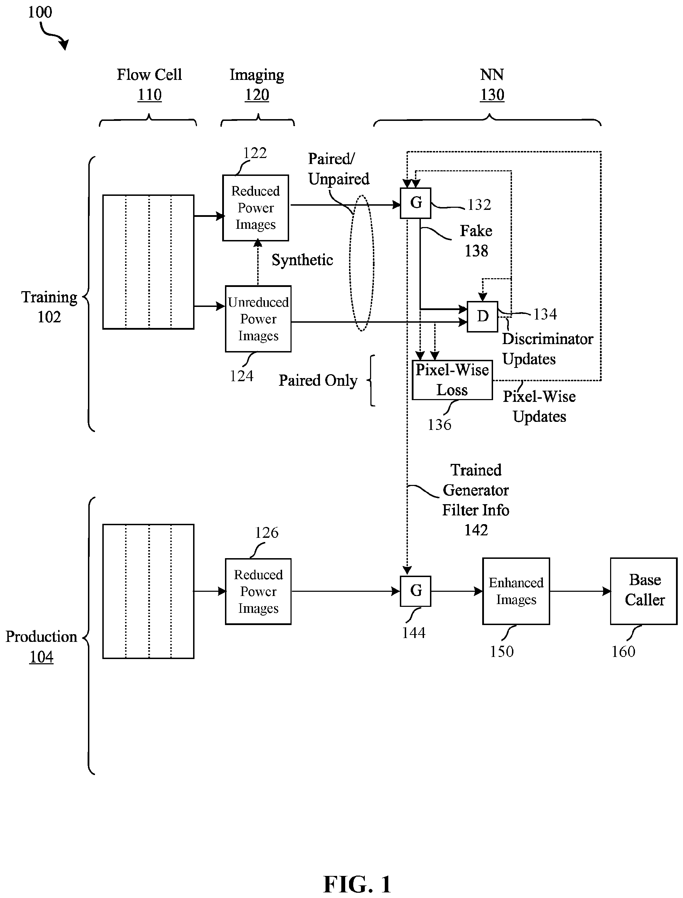

**FIG. 1** illustrates a system 100 implementing a GAN for AI-driven signal enhancement of sequencing images. The upper portion of the figure illustrates a training context 102 (such as using a laboratory sequencing instrument), and the lower portion illustrates a production context 104 (such as using one or more sequencing production instruments). From left to right the figure illustrates flow cell 110, imaging 120, and NN 130 sections. The training context NN section 130 comprises a GAN having Generator (G) 132, Discriminator (D) 134, and Pixel-wise Loss function elements 136. The production context NN section 104 comprises a Generator (G) 144 that produces Enhanced Images 150. In some implementations, the training context NN section and/or the production context NN section use, e.g., one or more convolutional layers to provide training and/or production functions and are therefore sometimes referred to as using CNNs. In various implementations, the training context NN section and/or the production context NN section are based on a transformer architecture, such as including one or more attention mechanisms. In various implementations, the Generator (G) 132 is based on a convolutional architecture and the Discriminator (D) 134 is based on a transformer architecture, and vice-versa. The illustration is applicable to training using paired images as well as training using unpaired images.

During training, images of tiles of flow cells 110 are taken and used to learn parameters (sometimes referred to as weights) of the training context NN. Reduced power images 122 (such as taken using reduced, e.g., low, laser excitation power) and unreduced power images 124 (such as taken using unreduced, e.g., high, laser excitation power) are collected either paired or unpaired, according to various implementations. The collected images (sometimes referred to as training images) are accessed and processed by the training context NN to learn the parameters. The accessing and processing are in accordance with the collected images being paired or unpaired, according to various implementations. All or any portions of the parameters conceptually correspond to an intermediate representation of the unreduced power images 124 such as with respect to the reduced power images 122, e.g., information relating to filters of the training context NN. After training is complete, the intermediate representation is provided to the production context NN for use in enhancing images taken at the reduced power, as illustrated by Trained Generator Filter Info 142. The enhanced images 150, in some scenarios, are of a quality approaching that of images taken at the unreduced power.

During production 104, singleton images, such as one image for each one of a plurality of tiles of a flow cell 110, are used for base calling. Sample areas are imaged at the reduced power, producing production reduced power images 126 (sometimes referred to as production images). The production reduced power images 126 are accessed by the production context NN. The production context NN adds information based on the Trained Generator Filter Info 142 to the production reduced power images 126 to substantially recover enhanced images 150, as if the enhanced images were taken at the unreduced power. The enhanced images 150 are then used for base calling by base caller 160. Thus, during production, the power level used for imaging is reduced from the unreduced (high) power to the reduced (low) power.

Returning to the training, the training NN Generator (G) 132 learns to generate so-called fake unreduced power images that closely resemble the (collected) unreduced power images 124 of the flow cells 110 and provides them to the training NN Discriminator (D) (conceptually indicated by the arrow labeled Fake 138). The Discriminator (D) 134 learns to distinguish between the fake unreduced power images 138 and the collected unreduced power images 124. Discriminator-sourced updates to parameters of the Generator (G) 132 and to parameters of the Discriminator (D)134 are indicated conceptually in the figure by the dotted arrow Discriminator Updates from the Discriminator (D) to the Generator (G) and the Discriminator (D). Additional updates to parameters of the Generator (G) are indicated conceptually in the figure by the dotted arrow Pixel-Wise Updates from the Pixel-Wise Loss element 136 to the Generator (G) 132.

Processing proceeds by initializing parameters of the training NN Generator (G) 132 and Discriminator (D) 134, accessing training images 122 and 124, propagating forward through the Generator (G) 132 and the Discriminator (D) 134, updating the parameters (e.g., via gradient descent and associated back propagation), and iterating the accessing/propagating/updating until an end condition is met. The initializing parameters comprises setting parameters of the Generator (G) 132 and setting parameters of the Discriminator (D) 134 to starting values, e.g., randomly within a predetermined range and/or distribution. Alternatively, as described regarding a pretraining implementation, all or any portions of the parameters are pretrained, such as a portion of parameters of the Generator (G) 132 and/or all the parameters of the Discriminator (D) 134. The accessing images may comprise accessing collected reduced power images and unreduced power images.

The propagating forward through the Generator (G) 132 comprises performing computations based on data of the reduced power images 122 (e.g., pixel data values) and the parameters of the Generator (G) 132. The computations are in accordance with the neural network architecture of the Generator (G) 132 and produce fake unreduced power images 138. The propagating images forward through the Discriminator (D) 134 comprises performing computations based on data of the reduced power images 122 (e.g., pixel data values) and on data of the fake unreduced power images 138 (e.g., pixel data) from the Generator (G) 132. The computations are in accordance with the neural network architecture of the Discriminator (D) 134 and produce information to update the parameters of the Generator (G) 132 and the Discriminator (D) 134.

Conceptually the reduced power image of a pair of images is processed by the Generator (G) 132 to create a fake unreduced power image. Then the fake unreduced power image is evaluated by the Discriminator (D) 134 to output a metric, e.g., a score, that represents whether the Discriminator (D) 134 believes the image is real or fake. This metric is compared to whether the image is a true or fake unreduced power image to calculate a discriminator loss. In some instances, this process is repeated with an unreduced power image to calculate the discriminator loss. Multiple real unreduced power images, fake unreduced power images, or mix of both, according to various implementations, are processed simultaneously and/or collectively to calculate an aggregate discriminator loss. A pixel-wise loss is computed between the reduced and unreduced power images of the pair. Discriminator updates (related to the discriminator loss) are determined and used to update parameters of the Generator (G) 132 and the Discriminator (D) 134. Pixel-wise updates (related to the pixel-wise loss) are determined and used to update parameters of the Generator (G) 132.

The updating the parameters comprises the Discriminator (D) 134 evaluating one or more loss functions and determining discriminator-sourced updates to the parameters of the Generator (G) 132 and the Discriminator (D) 134, such as via gradient update and/or gradient descent techniques. The updating the parameters further comprises the Pixel-Wise Loss element 136 determining pixel-wise updates to the parameters of the Generator (G) 132 such as via a pixel-wise loss function and/or via gradient update and/or gradient descent techniques. The pixel-wise loss function compares, on a small region-by-region basis (such as a single pixel or a small number of contiguous pixels), image data of the unreduced power image of a pair of images with a corresponding fake unreduced power image produced by the Generator (G) 132 based on image data of the reduced power image of the pair. The unreduced power image is considered the ground truth for the comparison against the fake unreduced power image produced by the Generator (G) 132. The comparison is via any combination of any one or more of a mean squared error loss and/or any other suitable small region image data comparison technique. The discriminator-sourced updates and the pixel-wise updates are then applied to the parameters of the Generator (G) 132 and the Discriminator (D) 134.

In various implementations, the comparison is via any combination of any one or more of a technique that accounts for local area around a particular pixel (e.g., SSI), PSNR, PSF and/or FWHM of a PSF, a Wasserstein-based metric, and variability in intensities for a single sequencing cycle. In various implementations, the comparison is based on intermediary activations of a NN. For example, comparing activation of the 5^{th} layer of a 10-layer discriminator when inputting a real vs fake reduced power image. Conceptually, comparing intermediary activations corresponds to comparing the similarity of real and fake reduced power images in a latent space defined by the discriminator.

In some implementations, such as some implementations based on unpaired training images, the Pixel-Wise Loss element and the Pixel-Wise Updates are omitted.

The iterating comprises repeating the accessing images, the propagating images, and the updating the parameters, and the repeating continues until the end condition is met, e.g., one or more completion criteria are met. In various implementations, the iterating is variously conditional on processing each of the unreduced power images at least once, processing each of the reduced power images at least once, processing a mini-batch quanta of image data, an optimization criterion reaching a corresponding threshold, an error term reaching a corresponding threshold, and any other criteria suitable for determining that sufficient training has occurred for the production context to successfully enhance reduced power images.

In some implementations represented by **FIG. 1****,** training of the NN is performed at least in part by pretraining the GAN. For example, the Generator (G) 132 and Discriminator (D) 134 are trained with unreduced power images before being trained with paired and/or unpaired images that include reduced power images.

In some GAN pretraining implementations, the Generator (G) has two sections, a conditional section and a generative section. The conditional section receives a reduced power image as input, processes it through a plurality of layers, and produces a key as an output. The generative section receives the key as input, processes it through a plurality of layers, and maps the key to a unique fake unreduced power image. In some GAN pretraining implementations, the Discriminator (D) is substantially similar to or identical to the Discriminator (D) 132 illustrated and described with respect to **FIG. 1****.**

Pretraining proceeds as follows. The generative section of the Generator (G) is used. In each iteration, the generative section is seeded with a random key, for example the key is an array of floating-point numbers sampled from a normal distribution. The size of the key is optionally a tunable hyperparameter. The generative section maps the key to a unique fake unreduced power image. The Discriminator (D) differentiates between the fake unreduced power image and a real unreduced power image. The losses from the discriminator are used to update the generative section and the Discriminator (D). The iterations continue until a desired performance is attained.

After the generative section and the Discriminator (D) have been pretrained, the conditional section of the Generator (G) is included, and training of the NN proceeds as described elsewhere herein, with parameters that have been initialized by the pretraining rather than, e.g., randomly. In some implementations, after the inclusion of the conditional section of the Generator (G), subsequent training of the NN in its entirety proceeds end-to-end. In some implementations, after the inclusion of the conditional section of the Generator (G), subsequent training of the NN proceeds by starting with the parameters of the generative section remaining unchanged and then later enabled to change, e.g., for fine-tuning.

In some usage scenarios, pretraining the GAN is motivated as follows. Signal enhancement using GANs implements a complex process of mapping a reduced power image to a point in a distribution of unreduced power images, and then mapping that point back to an unreduced power image. Pretraining the GAN enables the Generator (G) to learn the distribution of unreduced power images independent of any influence from the reduced power images. Conceptually, the Generator (G) becomes proficient by learning simple elements before learning complex elements. The key serves to create a seed for a mapping to a unique image in the learnt distribution. Thus, in some implementations, the output of the conditional section is multi-dimensional. Stated another way, in some implementations, the key is one-dimensional (e.g., a 1D array) and in other implementations the key is multi-dimensional.

In some pretraining implementations, the conditional section produces an image, such as a full-resolution image, in addition to the key. The generative section receives the image as well as the key. Pretraining of the generative section is modified to accommodate the image that is received in addition to the key.

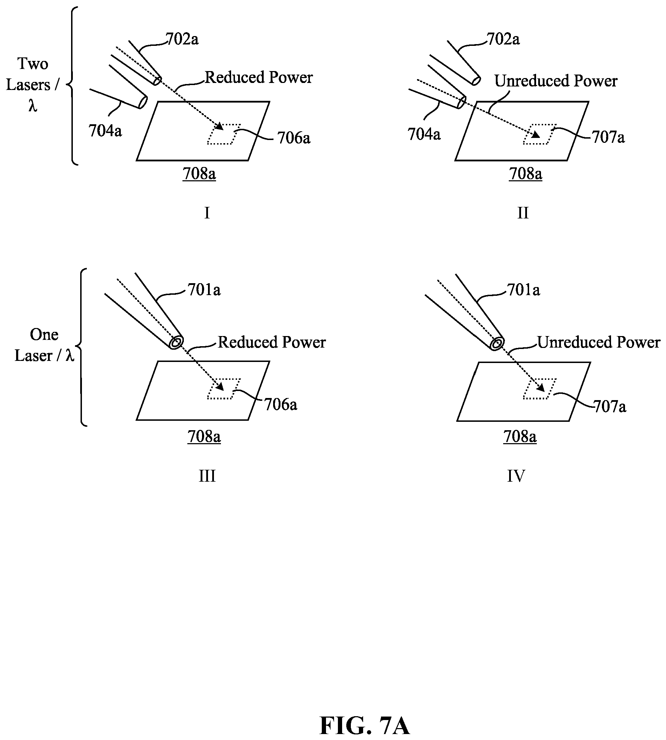

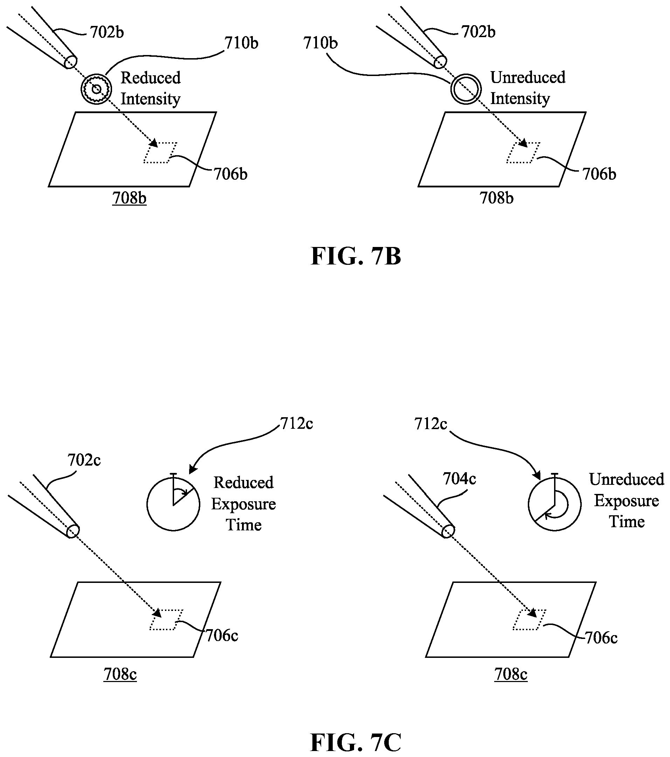

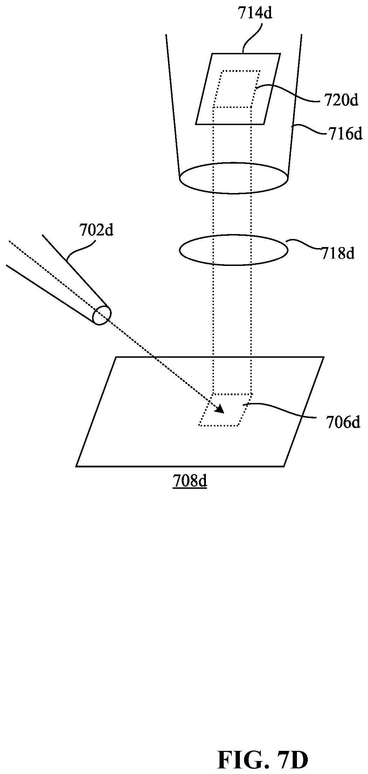

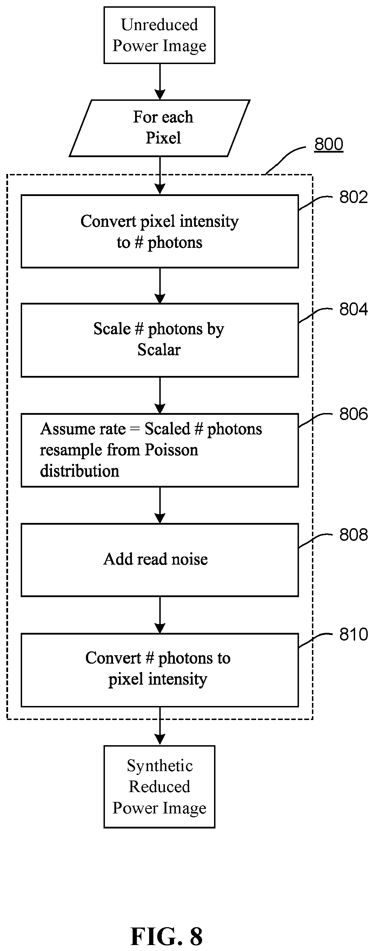

In the training context, as shown in **FIG. 1****,** a synthetic path 123 is indicated from the unreduced power images element 124 to the reduced power images element 122, illustrating optional production of synthetic reduced power images from unreduced power images. In some implementations, unreduced power images are collected by imaging at unreduced (e.g., high) power and reduced power images are collected by processing one or more of the unreduced power images to produce synthetic reduced power images, using the synthetic path. See, for example, **FIG. 8** and associated description. The synthetic reduced power images are then used in training as if collected by imaging at the reduced power. In some implementations, the Synthetic path is unused, and unreduced power images as well as reduced power images are collected by respectively imaging at unreduced (e.g., high) power and reduced (e.g., low) power. See, for example **FIG. 7A** and **FIG. 7B****,** as well as associated descriptions. In some implementations, unreduced power images and/or reduced power images are collected via proxy collection techniques that provide an approximation of the effect of collecting at unreduced and/or reduced power. See, for example **FIG. 7C** and **FIG. 7D****,** as well as associated descriptions..

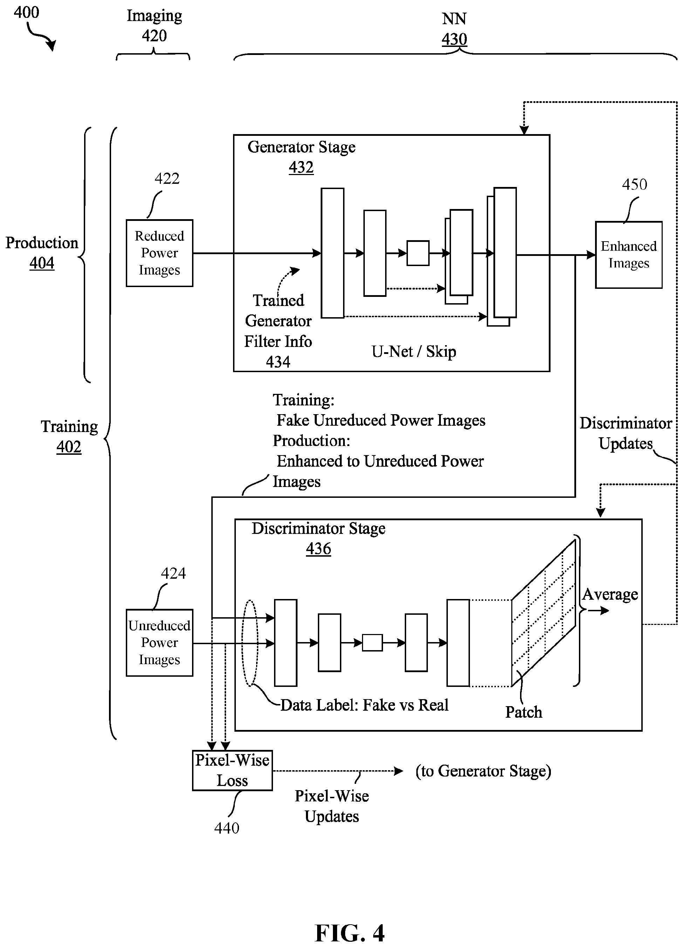

In some implementations, such as illustrated explicitly in the figure, the training NN Generator (G) (such as embodied in a laboratory instrument) is distinct from the production NN Generator (G) (such as embodied in a production instrument), and Trained Generator Filter Info is provided from the training NN Generator (G) to the production NN Generator (G). In some implementations, not illustrated, the training NN Generator (G) is used after training as the production NN Generator (G), and the Trained Generator Filter Info is used *in situ* for production. e.g., a sequencing instrument is used as a dual-purpose laboratory instrument and production instrument (see **FIG. 4** for an explicit illustration of an implementation having a dual-purpose laboratory instrument and production instrument).

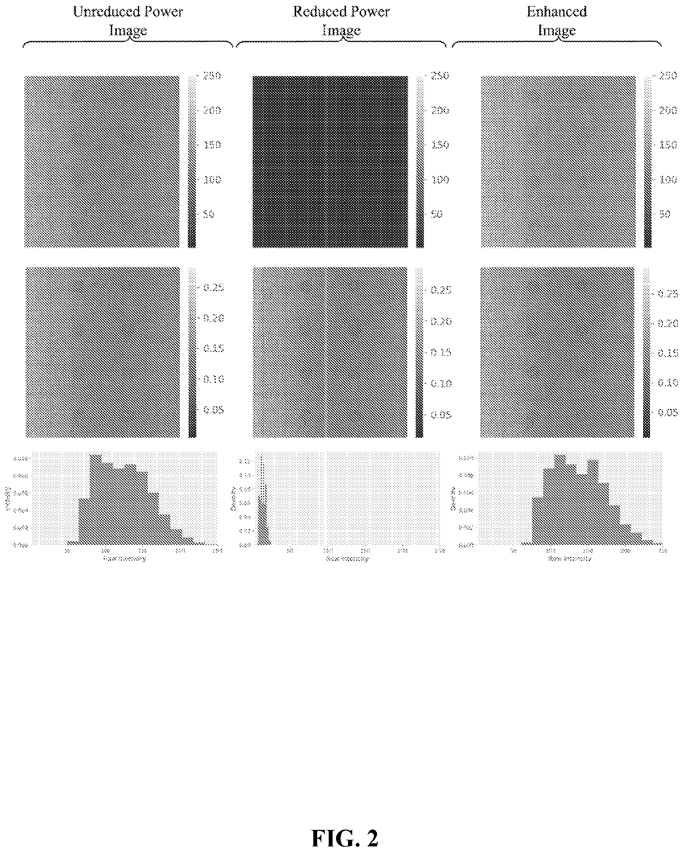

**FIG. 2** illustrates example images of reduced (low) power, unreduced (high) power, and enhanced images produced by AI-driven signal enhancement from images taken at the low (reduced) power. The top row illustrates raw images, the middle row illustrates normalized images, and the bottom row illustrates intensity histograms of the images. In some implementations, normalized images are used and/or produced by one or more preprocessing operations for use by subsequent neural network processing.

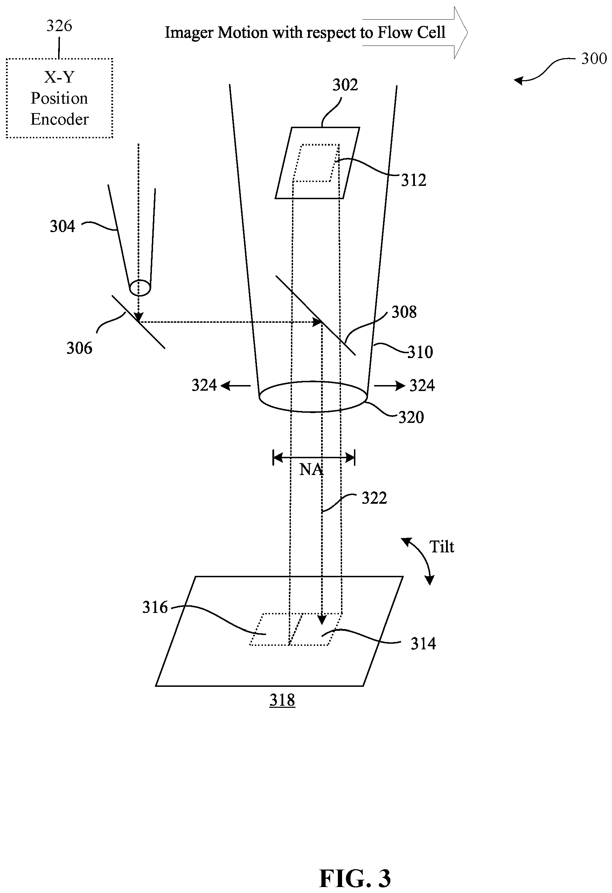

**FIG. 3** illustrates generally elements for imaging flow cells, as well as example opportunities for flow cell image improvement, enhancement, refinement, and/or other operations such as to enable improved based calling during sequencing by synthesis. The example opportunities arise as one or more lasers 304 illuminate a tile 314 of a flow cell 318 to stimulate fluorescence that is then imaged by a sensor 312 of an imager 310. The improved flow cell imaging includes, for example flow cell image improvement, enhancement, refinement, and/or other operations such as to enable improved base calling, e.g., during sequencing by synthesis.

The flow cell 318 is generally planar and comprises a plurality of generally parallel lanes imaged sequentially (point-and-shoot) as a series of tiles organized, e.g., as one or more columns or alternatively imaged continuously (continuous scanning) and processed as a series of one or more tiles. The imager 319 comprises the sensor 302, a semi-reflective mirror 308, and an objective 320. In some implementations, the lasers and the imager, as well as a mirror 306 positioned to direct emissions of the lasers toward the semi-reflective mirror, are arranged in a module.

In some implementations, the imager 310 and the flow cell 318 are moved relative to each other (such as by the flow cell proceeding on a movable platform along a predetermined path or by the imager and the lasers repositioning with respect to the flow cell as images are taken), as indicated by arrow Imager Motion with respect to Flow Cell. In point-and-shoot implementations, the Previously Imaged Tile 316 and the Tile Imaged at Reduced/Unreduced Power 314 represent two contiguous elements of the series of tiles, one imaged after the other. In continuous scanning implementations, the Previously Imaged Tile and the Tile Imaged at Reduced/Unreduced Power represent two contiguous regions of a portion of a lane of a flow cell (or alternatively a column thereof) that correspond to elements of the series of tiles.

In some implementations, the movable platform (sometimes referred to as a stage) comprises a flow cell receiving surface enabled to support the flow cell. In some implementations, a controller is coupled to the stage and the optical assembly. Some implementations of the controller (e.g., X-Y position encoder 326) are configured to move the stage and the optical assembly relative to each other in a step-and-shoot manner, sometimes referred to as a step and settle technique. Some implementations of the controller are configured to image a tiled region at a reduced power. Some implementations of the controller are configured to image a tiled region at an unreduced power. In various implementations, a biological sequencing instrument (such as a laboratory instrument or a production instrument) comprises all or any portions of elements depicted in the figure. In various implementations, the biological sequencing instrument comprises the stage, the optical assembly 300, and/or the controller.

In operation, emission of the lasers 304 is reflected off the mirror 306 onto the semi-reflective mirror308 and then reflected off the semi-reflective mirror to illuminate the tile 314 of the flow cell 318, as illustrated by the dashed arrow Power directed to the Tile Imaged at Reduced/Unreduced Power. Responsive to the illumination, fluorophores of the tile fluoresce. Light from the fluorescing passes through the objective 320 for focusing and continues through the semi-reflective mirror 308 forming an image 312 illustrated as Image at Reduced/Unreduced Power. The image is captured by the sensor 302.

As a specific operating example, one or more lasers provide illumination at a particular excitation power. Responsive to the illumination, one or more fluorescence-tagged nucleotides of the tile fluoresce, and the fluorescence is captured by the imager 310 as a collected image as one of a plurality of sequencing images usable for sequencing by synthesis. In various implementations, the low excitation power, compared to the high excitation power, is reduced by a factor between 2 to 1 and 10 to 1 compared to the high excitation power. For example, the low excitation power corresponds to a few hundred milliwatts (e.g., 500mW) and the high excitation power corresponds to a few watts (e.g., 2W). Images captured when the laser 304 is operated at a (reduced) low excitation power appear degraded with respect to images captured when the laser is operated at a high excitation power, since the fluorescence is lower intensity responsive to the low excitation power compared to the high excitation power. Thus, operating the laser at the low excitation power (conceptually illustrated as "Power" in the figure) is one of the example opportunities for improved flow cell imaging.

Other instances of the example opportunities for improved cell imaging include motion blur, tilt and/or non-planar blur, and a reduced numerical aperture of the imager. The motion blur (conceptually illustrated by "Motion Blur" in the figure), for instance, is introduced by relative movement between the flow cell and the imager when repositioning the flow cell and the imager with respect to each other to capture a next image of a next tile of the flow cell. For example, a next image is taken while the repositioning is still in progress. For another example, a next image is taken after the repositioning has occurred but while settling movement (e.g., vibration and/or residual motion) of the flow cell and/or the imager is occurring.

The tilt and/or non-planar blur (conceptually illustrated by "Tilt" in the figure), for instance, is introduced by differences in distance between the imager and various areas of a tile being imaged. For example, a nominally planar flow cell is out of optical alignment (e.g., tilted) with respect to the imager so that different portions (e.g., or more edges) of a same tile are at different distances from the imager. Thus, dependent on depth of field of the imager, one of the portions is improperly focused and thus degraded. For another example, an otherwise nominally planar flow cell has an imperfection so that one portion of a tile is closer to the imager than another portion of the tile.

The reduced numerical aperture of the imager (conceptually illustrated by "NA" in the figure), for instance, is introduced by using an imager of a lower numerical aperture compared to an imager of a larger numerical aperture. The lower numerical aperture results in images that are degraded with respect to images taken with the imager of the larger numerical aperture.AI-Driven Signal Enhancement of Sequencing Images - Further Example Implementations

**FIG. 4** illustrates a system 400 implementing a Conditional Generative Adversarial Network (CGAN) for AI-driven signal enhancement of sequencing images. In this example, the CGAN includes a CGAN U-Net-based generator stage 432 and a patch-based discriminator stage 436. The entirety of the figure illustrates a training context 402 (such as using a laboratory sequencing instrument), and the upper portion also illustrates a production context 404 (such as using one or more sequencing by synthesis production instruments). From left to right the figure illustrates imaging 420 and NN 430 sections. The imaging section 420 derives image data from imaging flow cells (not illustrated for clarity). The training context NN section comprises a CGAN having Generator Stage 432, Discriminator Stage 436, and Pixel-wise Loss function elements 440. The production context NN section comprises the Generator Stage element 432 that produces Enhanced Images 450 for use in base calling (not illustrated for clarity). In some implementations, the training context NN section and/or the production context NN section use, e.g., one or more convolutional layers to provide training and/or production functions and are therefore sometimes referred to as using CNNs. The illustration is applicable to training using paired images.

The operating context and operation of the CGAN of **FIG. 4** are similar to the GAN of **FIG. 1** as implemented based on paired training images. Conceptually, the Generator Stage 432 of **FIG. 4****,** in the training context and operation, corresponds to the training NN Generator (G) 132 of **FIG. 1****.** The Discriminator Stage 436 of **FIG. 4****,** in the training context and operation, corresponds to the training NN Discriminator (D) 134 of **FIG. 1****.** The Generator Stage 432 of **FIG. 4****,** in the production context and operation, corresponds to the production NN Generator (G)144 of **FIG. 1****.** In contrast to **FIG. 1****,** **FIG. 4** (as illustrated) is operable only with paired images (e.g., as collected as illustrated and described with respect to **FIG. 7A****,** **FIG. 7B****,** **FIG. 7C****,** **FIG. 7D****,** **FIG. 8****,** and **FIG. 9****).** In view of the foregoing correspondences, training of the Generator Stage 432 and Discriminator Stage 436 of **FIG. 4** proceeds as that of the training NN Generator (G) 132vand the training NN Discriminator (D) 134 of **FIG. 1** when operating with paired data.

Therefore, similar to the GAN of **FIG. 1** operating with paired images, during training, the CGAN of **FIG. 4** uses paired reduced power and unreduced power images 422 and 424 to learn parameters of the Generator and Discriminator Stages. All or any portions of the parameters conceptually correspond to an intermediate representation of the unreduced power images such as with respect to the reduced power images 422, e.g., information relating to filters of the training context NN. After training is complete, the intermediate representation is available for the production context NN (the Generator Stage) for use in enhancing images taken at the reduced power, as illustrated by Trained Generator Filter Info 434. The enhanced images 450, in some scenarios, are of a quality approaching that of images taken at the unreduced power.

During production, similar to the GAN of **FIG. 1****,** singleton images, such as one image for each one of a plurality of tiles of a flow cell, are collected and processed for base calling. Sample areas are imaged at the reduced power, producing production reduced power images that are accessed by the production context NN (the Generator Stage). The production context NN adds information based on the filters of the training context NN to the production reduced power images to substantially recover enhanced images, as if the enhanced images were taken at the unreduced power. The enhanced images 450 are usable for base calling. Thus, during production, the power level used for imaging is reduced from the unreduced (high) power to the reduced (low) power.

Turning to the Generator and Discriminator Stages of **FIG. 4****,** the Generator Stage 432 comprises an encoder-decoder with skip connections, forming a so-called U-Net style NN architecture. Randomness is introduced via dropout layers that are active during training as well as production. Conceptually, the encoder downsamples the reduced power images 422 and then the decoder upsamples results of the encoder to formulate the enhanced images 450. Stated another way, conceptually the encoder compresses the reduced power images 422 and then the decoder uncompresses results of the encoder. During training, the parameters of the encoder and the decoder are updated to effectively represent information salient to the enhancing. All or any portions of the parameters at completion of the training are referred to as filters. The skip connections enable sharply focused image enhancement by providing same-resolution information from an early layer to a later layer with a same resolution, "skipping" intervening compressing/decompressing layers.

The Discriminator Stage 436 comprises a classifier with a patch-based averaging layer, forming a so-called convolutional PatchGAN classifier. Training includes labeling images (conceptually illustrated in the figure by the dotted ellipse identified as Data Label: Fake vs Real) from the Generator Stage 432 (Fake Unreduced Power Images) as fake and imaging images (Unreduced Power Images) as real. Classification is determined by an output layer that independently classifies individual patches of the output as real or fake (e.g., each patch classification is represented by a corresponding respective scalar value) and then averages results of the independent individual patch classifications into an overall image classification (e.g., 'fake' or 'real' or a probability thereof represented by a single scalar value), hence the PatchGAN nomenclature. As illustrated, in some implementations the output layer is sized to match sizes of the Fake Unreduced Power Images and (real) Unreduced Power Images input to the Discriminator Stage. The dotted-line rectangles in the illustrated projection of the output layer are illustrative of the individual patches, one of which is identified as Patch in the figure.

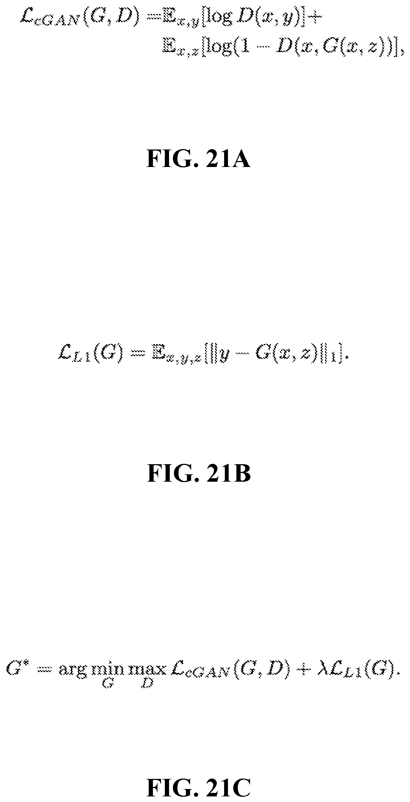

The Discriminator Stage 436 provides information for updating parameters of the Generator Stage 432 and the Discriminator Stage 436, as indicated conceptually in the figure by the dotted arrow Discriminator Updates from the Discriminator Stage to the Generator Stage and the Discriminator Stage. The Discriminator Updates correspond to an adversarial-based loss, such as represented by the example equation of **FIG. 21B****.** The Pixel-Wise Loss element 440 provides further information for updating parameters of the Generator Stage 432, as indicated by the dotted arrow Pixel-Wise Updates that feeds to the Generator Stage. The Pixel-Wise Loss Updates 440 correspond to a distance-based loss, such as represented by the example equation of **FIG. 21A****.** In some implementations, the Generator Stage 432 is updated in accordance with a weighting of an adversarial-based loss and a distance-based loss, such as represented by the example equation of **FIG. 21C****.**

In some implementations, such as illustrated explicitly in the figure, the Generator Stage 432 is used for training as well as for production. E.g., a sequencing instrument is used as a dual-purpose laboratory instrument and production instrument. Trained generator filter info 434 produced in the Generator Stage 432 (as a result of training) is used *in situ* for production. In some implementations, not illustrated, there are at least two instantiations of the Generator Stage 432, a first for training (such as embodied in a laboratory instrument) and a second or more for production (such as embodied in one or more production instruments), and the trained generator filter info 434 produced in the training instantiation of the Generator Stage is provided to the production instantiations of the Generator Stage for production (see **FIG. 1** for an explicit illustration of an implementation having a laboratory instrument separate from production instruments).

In some implementations related to **FIG. 4****,** training is based on unpaired images, and the Pixel-Wise Loss element and the Pixel-Wise Updates are omitted.

Isola et al discloses various techniques applicable to some implementations related to **FIG. 4****.**

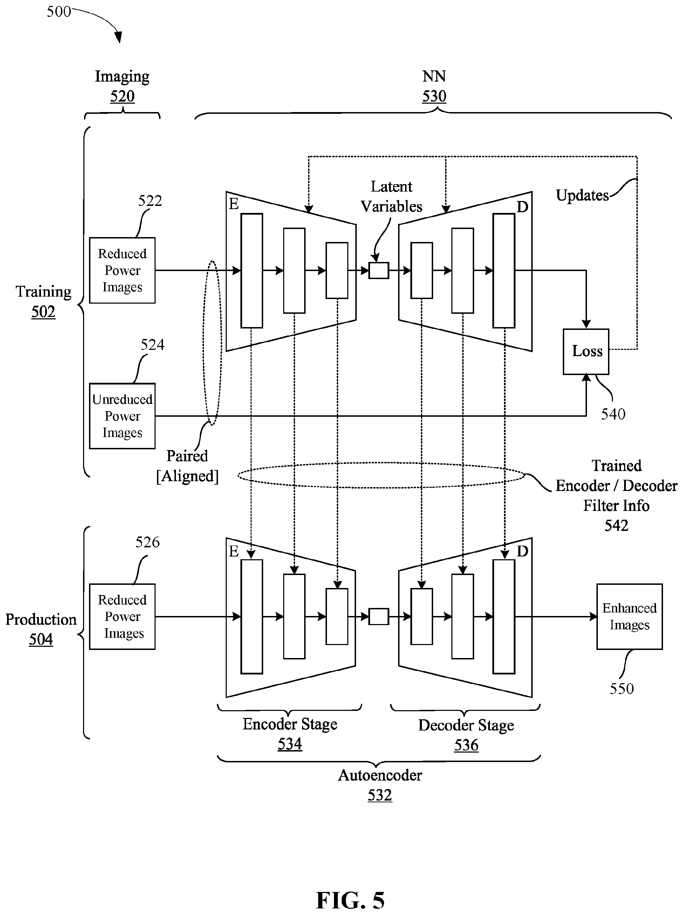

**FIG. 5** illustrates a system 500 including NN 530 implementing an autoencoder 532 with an encoder stage 534 and a decoder stage 536. The upper portion of the figure illustrates a training context (such as using a laboratory sequencing instrument), and the lower portion illustrates a production context (such as using one or more sequencing by synthesis production instruments). From left to right the figure illustrates imaging and NN sections. The imaging section derives image data from imaging flow cells (not illustrated for clarity). The training context NN section comprises a training autoencoder having an encoder stage (E) and a decoder stage (D). The production context NN section comprises a production autoencoder having an encoder stage (E) and a decoder stage (D). In some implementations, the training context NN section and/or the production context NN section use, e.g., one or more convolutional layers to provide training and/or production functions and are therefore sometimes referred to as using CNNs. The illustration is applicable to training using paired images.

The operating context and operation of the autoencoder of **FIG. 5** are similar to the GAN of **FIG. 1****.** Conceptually, the training context autoencoder of **FIG. 5****,** in the training context and operation, corresponds to the training context GAN of **FIG. 1****.** The production context autoencoder of **FIG. 5****,** in the production context and operation, corresponds to the production NN Generator (G) of **FIG. 1****.** In contrast to **FIG. 1** and like **FIG. 4** (as illustrated), **FIG. 5** is operable only with paired images (e.g., as collected as illustrated and described with respect to **FIG. 7A****,** **FIG. 7B****,** **FIG. 7C****,** and **FIG. 7D****).** In view of the foregoing correspondences, training of the training context autoencoder of **FIG. 5** proceeds via accessing of paired training images from reduced power images 522 and unreduced power images 524. The reduced power image of a pair of images is processed by the autoencoder 532 and the result is compared to a ground truth, e.g., the unreduced power image of the pair. A distance-based loss function 540, such as an L1 loss function, is used in part to determine updates to parameters of the autoencoder. Parameter updates may be received by the encoder via backpropagation through the decoder, in which case backpropagation may be a unified operation through both the decoder and encoder in sequence.

Therefore, similar to the GAN of **FIG. 1** operating with paired images, during training, the training context autoencoder of **FIG. 5** uses paired reduced power and unreduced power images to learn parameters of the autoencoder, e.g., parameters of the encoder (E) and parameters of the decoder (D). All or any portions of the parameters conceptually correspond to an intermediate representation of the unreduced power images such as with respect to the reduced power images, e.g., information relating to filters of the training context NN. After training is complete, the intermediate representation is provided to the production context autoencoder for use in enhancing images taken at the reduced power, as illustrated by Trained Encoder / Decoder Filter Info 542. The enhanced images, in some scenarios, are of a quality approaching that of images taken at the unreduced power.

During production, similar to the GAN of **FIG. 1****,** singleton images, such as one image for each one of a plurality of tiles of a flow cell, are collected and processed for base calling. Sample areas are imaged at the reduced power, producing production reduced power images that are accessed by the production context NN (the production context autoencoder). The production context NN adds information based on the filters of the training context NN to the production reduced power images to substantially recover enhanced images, as if the enhanced images were taken at the unreduced power. The enhanced images 550 are usable for base calling. Thus, during production, the power level used for imaging is reduced from the unreduced (high) power to the reduced (low) power.

Turning to the Encoder and Decoder Stages of **FIG. 5****,** the Encoder Stage (E) comprises a plurality of layers, such as processing layers (e.g., convolutional layers), activation layers, and pooling layers of successively smaller dimensions, collectively enabled to compress representation of reduced power images to a relatively small representation (as illustrated conceptually by the Latent Variables element). The Decoder Stage (D) comprises layers (e.g., similar to those of the Encoder Stage) but dimensionally organized in "reverse" compared to the layers of the Encoder Stage, arranged in successively larger dimensions, so as to conceptually uncompress the latent variable information into a full-sized reconstructed image (e.g. corresponding to all or substantially all of a field of view of an imager) or alternatively a reconstructed image sized corresponding to input provided to the Encoder Stage (e.g., corresponding to one of a plurality of small patches of an image collected by an imager). In the production context, the reconstructed image corresponds to an enhanced image with quality corresponding to that of an unreduced power image. During training, the parameters of the encoder and the decoder stages are updated to effectively represent information salient to the enhancing. All or any portions of the parameters at completion of the training are referred to as filters.

In some implementations, such as illustrated explicitly in the figure, the training NN autoencoder (such as embodied in a laboratory instrument) is distinct from the production NN autoencoder (such as embodied in a production instrument), and Trained Encoder / Decoder Filter Info is provided from the training NN autoencoder to the production NN autoencoder. In some implementations, not illustrated, the training NN autoencoder is used after training as the production NN autoencoder, and the Trained Encoder / Decoder Filter Info is used *in situ* for production. E.g., an instrument is used as a dual-purpose laboratory instrument and production instrument (see FIG. 4 for an explicit illustration of an implementation having a dual-purpose laboratory instrument and production instrument). In some implementations (not illustrated), the autoencoder 502 includes skip connections between the encoder stages and the decoder stages, e.g., in a U-Net model.

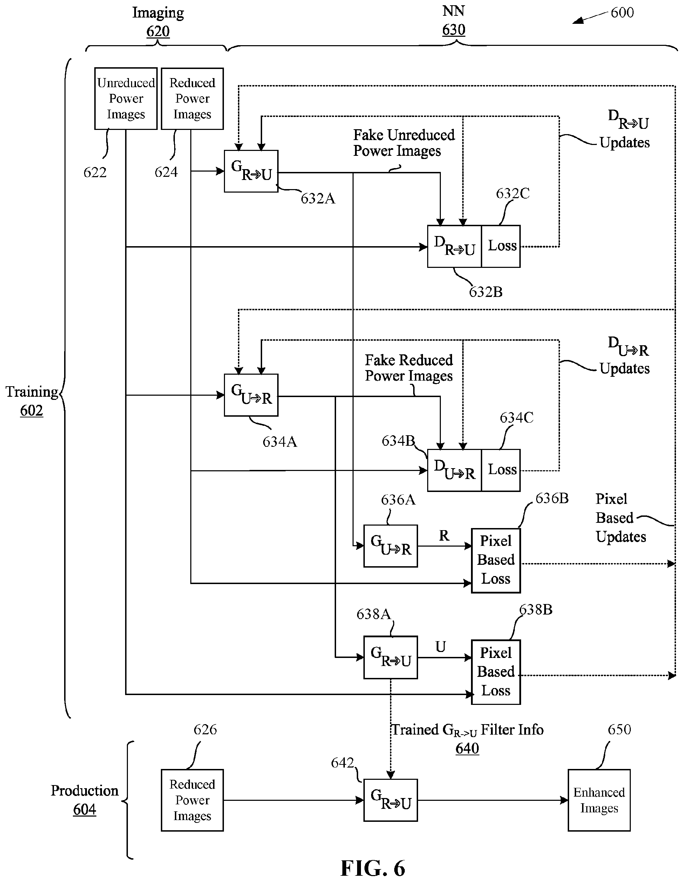

**FIG. 6** illustrates AI-driven signal enhancement of sequencing images in a system 600 implementing a cycle-consistent GAN. The upper portion of the figure illustrates a training context 602 (such as using a laboratory sequencing instrument), and the lower portion illustrates a production context 604 (such as using one or more sequencing production instruments). From left to right the figure illustrates imaging 620 and NN 630 sections. The imaging section 620 derives image data, e.g., from imaging flow cells (not illustrated for clarity). The training context NN section comprises a training CycleGAN having two pairs of coupled generator and discriminator elements (632A and 632B and 634A and 634B) and a pair of associated coupled generator and pixel-based loss elements (636A and 636B and 638A and 638B). The production context NN section comprises a production generator 642. In some implementations, the training context NN section and/or the production context NN section use, e.g., one or more convolutional layers to provide training and/or production functions and are therefore sometimes referred to as using CNNs. The illustration is applicable to training using unpaired images.

The operating context and operation of the CycleGAN of **FIG. 6** are similar to the GAN of **FIG. 1****.** Conceptually, the training and production contexts of **FIG. 6** correspond respectively to the training and production contexts of **FIG. 1****,** when trained with unpaired images. After training is complete, trained parameters are provided from the training context to the production context for use in enhancing images taken at the reduced power, as illustrated by Trained G_{R->U} Filter Info 640. During production, singleton images taken at the reduced power are enhanced by the production context to substantially recover enhanced images, as if the enhanced images were taken at the unreduced power. The enhanced images 650 are usable for base calling. Thus, during production, the power level used for imaging is reduced from the unreduced (high) power to the reduced (low) power.

In some implementations, training proceeds as follows. Each of the coupled generator and discriminator elements determine loss information (632C and 634C) and corresponding parameter update information similar to the training context G and D elements of **FIG. 1****.** One of the coupled generator and discriminator elements (632A and 632B) attempts to learn how to produce fake unreduced power images from the reduced power images. The other of the coupled generator and discriminator elements (634A and 634B) attempts to learn how to produce fake reduced power images from the unreduced power images. Each of the coupled generator and pixel-based loss elements determine distance-based loss information and corresponding parameter update information. One of the coupled generator and pixel-based loss elements (638A and 638B) determines a distance-based loss function between the unreduced power images (interpreted as ground truth) and the fake reduced power images after processing back to unreduced power images by the G_{R->U} generator 638A. The other of the coupled generator and pixel-based loss elements (636A and 636B) determines a distance-based loss function between the reduced power images (interpreted as ground truth) and the fake unreduced power images after processing back to reduced power images by the G_{U->R} generator 636A. The parameter update information from the coupled generator and discriminator elements is combined with the parameter update information from the coupled generator and pixel-based loss elements to determine overall parameter updates for the discriminators and the generators, e.g., via a weighting technique.

In some implementations, the two generator elements G_{R->U} 632A and 638A in the training context are identical in operation, structure, and/or NN architecture to each other and are also identical in operation, structure, and/or NN architecture to the generator element G_{R->U} 642 in the production context. For example, the two generator elements G_{R->U} in the training context are implemented in a same ASIC. For another example, the two generator elements G_{R->U} 632A and 638A in the training context and the generator element G_{R->U} 642 in the production context are implemented via a same set of programmed instructions.

Zhu et al. discloses various techniques applicable to some implementations related to **FIG. 6****.**

In various implementations, performance of NNs (e.g., as described with respect to the GAN of **FIG. 1****,** the CGAN of **FIG. 4****,** the autoencoder of **FIG. 5****,** the CycleGAN of **FIG. 6****,** and/or other NNs described elsewhere herein) is improved by having x and y input dimensions equal to or approximately equal to x and y output dimensions. Another improvement is increasing z input dimension (e.g., by number of images and/or channels input, and/or additional encoding, such as distance to nearest cluster center). Another improvement is collecting and using information from images from multiple sequencing cycles. Other improvements include normalizing whole images (instead of sub-images), performing gradient clipping (e.g., during GAN training), regularizing norm of the gradient (e.g., during GAN training), and discarding edge artifacts (e.g., as introduced by image alignment). For various implementations of CNN-based NNs, performance is improved by using depthwise convolutions, inverted bottlenecks, separating downsampling layers (e.g., instead of a 3x3 convolution with stride two, explicit downsampling with a 2x2 convolution with stride two), increasing kernel sizes, preferentially using layer normalization instead of batch normalization, preferentially using GELU instead of ReLU, and/or reducing layers used (e.g., fewer activation layers and/or fewer normalization layer). For various implementations of transformer based NNs, performance is improved shifting windows between attention blocks to enable encoding spatial information between patches. For some PatchGAN implementations, adaptations to attend to high spatial frequencies are beneficial.

### Cumulative Sample Damage

Photon budget requirements for sequencing methodologies on Next Generation Sequencing (NGS) platforms, particularly with SBS-based processes, are relatively high. In one example, NGS workflow involves loading, e.g., a DNA library onto a flow cell and hybridizing individual adapter-ligated DNA fragments to adapter-specific complimentary oligonucleotides covalently bound to a flow cell surface; clustering the individual fragments into thousands of identical DNA template strands (or amplicons) through amplification (e.g., bridge or exclusion amplification); and, finally, sequencing, in which copy strands are simultaneously synthesized and sequenced on the DNA templates using a reversible terminator-based process that detects signals emitted from fluorophore tagged single bases as they are added round by round to the copy strands. Because the multiple template strands of each cluster have the same sequence, base pairs incorporated into the corresponding copy strands in each round will be the same, and thus the signal generated from each round will be enhanced proportional to the number of copies of the template strand in the cluster.

The fluorescence microscopy implemented in NGS is performed using an optical imaging system that includes a light source (e.g., lasers, light emitting diodes (LEDs)) tuned to wavelengths of light that induce excitation in the fluorescing labels(fluorophores); one or more optical instruments, such as cameras, lenses, sensors, detect and image signals emitted through induced excitation, and one or more processors for developing composite images from signals detected and imaged from a plurality of clusters within the optical elements' field of view (tile) in a given round, in which each round corresponds to an operation cycle of the imaging system. In each cycle, the plurality of clusters is exposed to excitation power. The total number of cycles corresponds to a read length of bases on the template strands of each of the clusters. Example read lengths may be 50, 75, 150, and 300 base pairs, which correspond to a respective number of total cycles. Moreover, the fluorescence chemistry of NGS requires as many as four images per cycle to capture fluorescence of each of the four base types added in a given round. For example, four channel chemistry uses four different fluorescent labels, one for each base, where four images per cycle are necessary to capture fluorescence of the unique labels for each base. One example SBS-based technology involves two-channel chemistry that uses only two fluorescent labels and two images to determine all four base calls. Images are taken using blue and green filter bands, where Thymines are labeled with a green fluorophore, cytosines are labeled with a blue fluorophore, adenines are labeled with both blue and green fluorophores, and Guanines are permanently dark. Other fluorophores may be used, such as other fluorophores in the visible and non-visible spectrum. These exposure requirements apply whether the sequencing run is conducted in the context of production or training, as described herein.

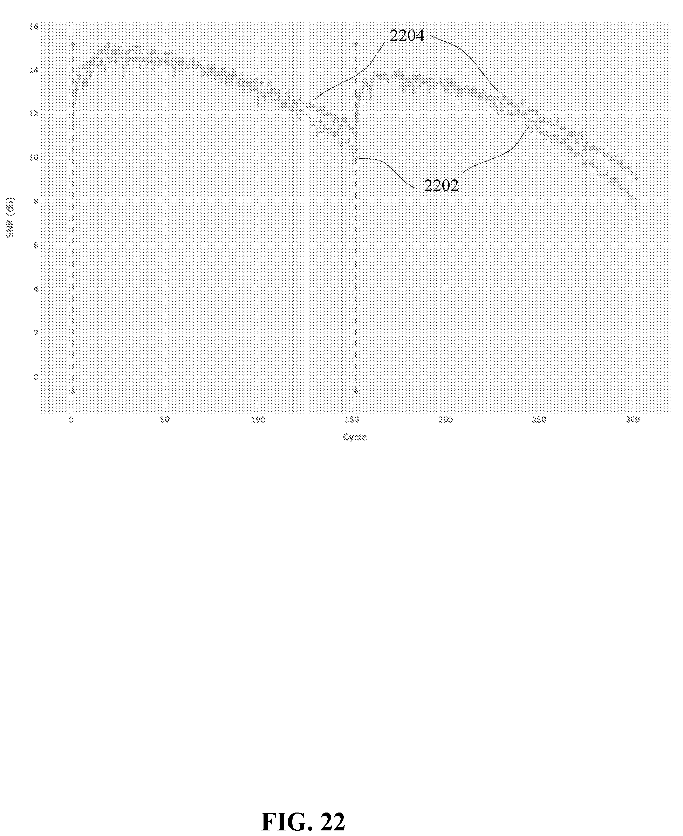

Samples are susceptible to photodamage and/or photobleaching from repeated exposure to the high-intensity light required to excite fluorophores. Photodamage to the target nucleic acid materials may arise due to generation of chemically reactive species such as free radicals and specifically singlet and triplet forms of oxygen, which can interact with nucleic acid molecules to cause depurination/ depyrimidination, hydrolytic deamination and base conversion. Acquired photodamage results in image artifacts and aberrations, and the quality of the data of the signal of interest declines according to a logarithmic decay function with cumulative exposure to excitation over the course of a sequencing run. Photobleaching of the fluorescent labels damage the fluorophore such that the fluorophore has reduced fluorescence (i.e., dimming) or may cease to fluorescence. (See, e.g., FIG. 22, SNR over a sequencing run, in which line 2202 represents fully corrected SNR between Cytosine and Guanine clouds (blue channel), and line 2204 represents fully corrected SNR between Guanine and Thymine clouds (green channel).)

In some implementations, imaging using more than one excitation power is performed in order of increasing excitation power, the lowest being performed first and the highest being performed last. In some implementations, imaging using more than one excitation power is performed back and forth between excitation powers, such as performing imaging at a lower power, then at a higher power, than returning to the lower power, and so forth.

In addition to sample and/or dye damage caused by exposure to excitation power, in some scenarios, some oligos of a cluster fall out of sync, e.g., out of phase with respect to other oligos of the cluster. Nominally, during each sequencing by synthesis cycle, the chemical actions result in one fluorophore being added to each of the oligos of the cluster. However, in some scenarios, the chemical actions fail to add the one fluorophore to each of the oligos. For example, a failure results in no fluorophore being added to an oligo, resulting in so-called phasing. For another example, a failure results in adding two or more fluorophores to an oligo in a single sequencing cycle, resulting in so-called pre-phasing. The phasing and pre-phasing failures are cumulative over the sequencing cycles, similar to the damage caused by exposure to excitation power.

### Paired Image Collection

In some implementations, capturing a paired image comprises capturing two images of a same tile of a flow cell. Each of the two images is of a same target sample of a biological material (e.g., DNA, RNA, polypeptide). One of the images of the pair is a reduced power image and the other image of the pair is an unreduced power image. In some implementations, the reduced power image is collected before the unreduced power image, such as to reduce sample damage. Capturing of paired images is repeated, e.g., for the entirety of tiles of the flow cell, and optionally for tiles of additional flow cells.

For example, an imager images a tile of a flow cell at the reduced power and then at the unreduced power, without moving the flow cell and the imager with respect to each other. The reduced power and the unreduced power images collectively form a paired image of the tile. Then the flow cell and the imager are moved with respect to each other to a next tile and a paired image of the next tile is collected. The moving and collecting is repeated, e.g., over the entirety of tiles of the flow cell and optionally for one or more additional flow cells.

For another example, a flow cell is imaged according to a sequencing of tiles of the flow cell, and each image is captured via a reduced power laser. Then the flow cell is again imaged according to the sequence, but each image is captured via an unreduced power laser. The images captured via the reduced power laser are paired with the images captured via the unreduced power laser according to ordering of the sequence, forming a plurality of paired images of the flow cell. The image capturing is optionally repeated for one or more additional flow cells.

The foregoing technique of paired image collection is in accordance with sequencing by synthesis that uses chemistry compatible with single wavelength (e.g., color) imaging. Sequencing by synthesis that uses chemistry compatible with a plurality of wavelengths repeats the imaging for each of the plurality of wavelengths so that there are paired images for each of the wavelengths.

The paired images of the flow cells are usable as all or any portions of a training set of paired images for training NNs according, e.g., to any of **FIG. 1****,** **FIG. 4****,** and **FIG. 5****.**

There are various implementations of paired image collection, such as via laser excitation power titration (e.g., one or more reduced power lasers and one or more unreduced power lasers), a tunable acousto-optic modulator to attenuate laser power (e.g., from the unreduced power to the reduced power), exposure time titration (e.g., an unreduced exposure time corresponding to the unreduced power and a reduced exposure time corresponding to the reduced power), and a variable attenuator to attenuate return image power (e.g., from corresponding to the unreduced power to corresponding to the reduced power). In some implementations, paired image collection is performed by capturing the unreduced power image of a pair (e.g., via one or more unreduced power lasers) and then synthesizing the reduced power image element of the pair from the captured unreduced power image.

**FIG. 7A** illustrates paired image collection using laser excitation power titration. There are four quadrants in the figure (I-IV). The upper two quadrants (I, II) illustrate implementations with two lasers per wavelength, one operating at the reduced power (702a) and one operating at the unreduced power (704a). The lower two quadrants (III, IV) illustrate implementations with one laser per wavelength(701a), enabled to operate (as illustrated on the left) at the reduced power, and further enabled to operate (as illustrated on the right) at the unreduced power. The left two quadrants (I, III) illustrate collecting a first element of a pair of images of a same flow cell tile 707a at the reduced power. The right two quadrants (II, IV) illustrate collecting a second element of the pair of the same flow cell tile 706a at the unreduced power.

**FIG. 7B** illustrates paired image collection using an acousto-optic tunable filter 710b to attenuate laser power of laser 702b. The left-hand portion of the figure illustrates collecting a first element of a pair of images of a same flow cell tile 706b of flow cell 708b at the reduced power by configuring the acousto-optic tunable filter 710b to attenuate laser power. The right-hand portion illustrates collecting a second element of the pair of the same flow cell tile 706b at the unreduced power by configuring the acousto-optic tunable filter 710b to not attenuate laser power. In some implementations using a plurality of lasers (e.g., per wavelength / color), there is a single acousto-optic tunable filter to attenuate all the lasers. In various implementations using a plurality of lasers, there are one or more acousto-optic tunable filters to attenuate all the lasers. For example, there is a respective acousto-optic tunable filter for each of the lasers. In some implementations, the acousto-optic tunable filter is enabled to rapidly modulate laser amplitude responsive to an electrical signal, thereby producing the attenuation (or lack thereof) of the laser power, providing for tile imaging at the reduced power and the unreduced power in rapid succession.

**FIG. 7C** illustrates paired image collection using exposure time titration 712c to effectively alter image collection power from laser 702c. The left-hand portion of the figure illustrates collecting a first element of a pair of images of a same flow cell tile 706c of flow cell 708c at the reduced power by performing the imaging at a reduced exposure time, effectively subjecting a tile to the reduced power. The right-hand portion illustrates collecting a second element of the pair of the same flow cell tile 706c at the unreduced power by performing the imaging at an unreduced exposure time, effectively subjecting the tile to the unreduced power.

**FIG. 7D** illustrates paired image collection using a variable attenuator 718d to effectively alter image collection power of laser 702d. The variable attenuator reduces return image power between a same flow cell tile 706d of a flow cell 708d and an imager 716d. At a first time, a first element of a pair of images of a same flow cell tile is collected by configuring the variable attenuator 718d to attenuate the return image 714d captured by a sensor 714d so that the image effectively corresponds to an image taken at the reduced power. At a second time, a second element of the pair of images of the same flow cell tile is collected by configuring the variable attenuator 7218d to not attenuate the return image so that the image effectively corresponds to an image taken at the unreduced power. In some implementations, one or more optical elements are used to enable colinear operation of the lasers and the imager. For example, the lasers and the imager 716d share a same objective, as illustrated in **FIG. 3****.**

In various implementations relating to **FIG. 7A****,** **FIG. 7B,** and **FIG. 7C****,** a same imager is used (e.g., sequentially) to collect the first and the second elements of a pair of images of a same tile at different times using different laser excitation powers **(****FIG. 7A****),** different exposure times **(****FIG. 7B****),** or using different attenuator configurations **(****FIG. 7C****).** In some implementations, two imagers are used (e.g., in parallel) to collect the first and the second elements at a same time (e.g., at least partially overlapping in time). In some two imager attenuator implementations, one or more fixed attenuators are used instead of one or more variable attenuators. In some implementations, there is no relative movement between imager(s) and a tile being imaged between collecting the first and the second elements of a pair of images of the tile. In some implementations without relative movement, aligning the first and the second elements is reduced in complexity (compared to implementations with relative movement) and/or is optional.

For example, a laser is operated at the reduced power and an imager collects a reduced power image of a tile. Then the laser is operated at the unreduced power and the imager collects an unreduced power image of the tile. There is no movement between the imager and the tile during the collection of the reduced and unreduced power images of the tile, and in this example, alignment between the reduced and unreduced power images is omitted. For another example, a single laser is operated at the unreduced power, and respective first and second imagers are operated at least partially in parallel for respective exposure times to collect respective images of a same tile. One of the respective exposure times is the reduced exposure time and the other of the respective exposure times is the unreduced exposure time. There is no movement between the imagers and the same tile during the collection of the respective images, and in this example, alignment between the respective images is omitted. For yet another example, a single laser is operated at the unreduced power, and respective first and second imagers are operated at least partially in parallel at respective attenuation configurations (either variably for a variable attenuator or fixedly for a fixed attenuator) to collect respective images of a same tile. One of the respective attenuation configurations corresponds to an image taken at the reduced power and the other of the respective attenuation configurations corresponds to an image taken at the unreduced power. There is no movement between the imagers and the same tile during the collection of the respective images, and in this example, alignment between the respective images is omitted.

### Alignment of Images

In some implementations, training using paired images uses paired images in which the two images of the pair are aligned to each other (e.g., to sub-pixel resolution), such as based in part on information of one or more fiducials located in the images and via one or more data processing operations.

A specific example of aligning the two images of a paired image is as follows. Flow cells are marked with fiducials at pre-determined locations. A set of coefficients (e.g., based on an affine transform) are calculated based on locations of the fiducials in the two images and the set of coefficients is used to formulate transformed images as an intermediate alignment of the two images to a virtual reference frame, forming two respective transformed images. Then, the transformed images are interpolated to produce aligned images. Interpolation is performed variously via any combination of nearest-pixel, linear, quadratic, cubic, and/or higher order techniques, as well as band-limited interpolation techniques. A variant of the foregoing technique aligns the unreduced power image of the pair to the reduced power image of the pair instead of aligning each of the images to a virtual reference frame. In some implementations, aligning the two images of a paired image includes correction of optical distortion, such as via an iterative curve fitting procedure to estimate distortion coefficients.

In some implementations, aligning the two images of a paired image introduces undesirable artifacts into an image. For example, if aligning shifts an image in a particular axis (such as the x-axis), then zero padding is used to maintain a same image resolution. If the two images of a pair are shifted by different amounts, then respective different zero padding amounts are used for each image of the pair. In some scenarios, the respective different zero padding amounts lead to reduced efficiency during NN training. In some implementations, all or any portions of zero padding of images (e.g., all or any portions of some edges of images) are discarded during NN training.

### Unpaired Images

In some implementations, paired images are disadvantageous such as due to higher image collection cost, longer data processing time, and/or poorer base calling accuracy. For example, processing a same sample two times (a first time at a first excitation power for first elements of the paired images and a second time at a second excitation power for second elements of the paired images) degrades the sample leading to poorer base calling accuracy. Thus, in some implementations, unpaired images are advantageous. Processing respective samples at respective excitation powers reduces sample degradation as each sample is processed only a single time.

In some implementations, capturing unpaired images comprises capturing two pluralities of images. A first of the pluralities is imaged at a low power and a second of the pluralities is imaged at a high power. In some implementations, the pluralities are of tiles of a same flow cell. In some implementations, the pluralities are of tiles of different flow cells. In some implementations, at least one of the tiles imaged at the low power is also imaged at the high power. In some implementations, none of the tiles imaged at the low power are also imaged at the high power.

The unpaired images of the flow cells are usable as all or any portions of a training set of unpaired images for training NNs according, e.g., to any of **FIG. 1** and **FIG. 6****.**

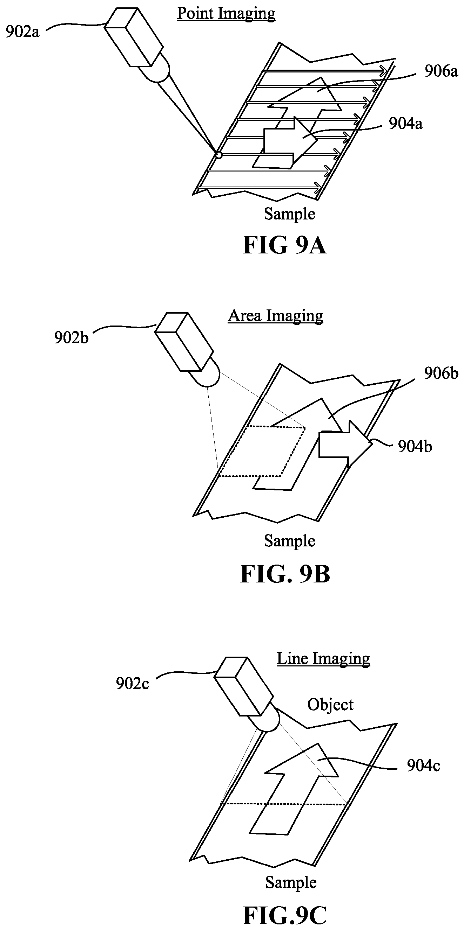

**FIGS. 9A-C** collectively illustrate various sequencing image collection techniques for a sample. Point, area, and line imaging techniques are illustrated. Image data is collected by an imager (902a-c) for a collection area (such as corresponding to a tile of a flow cell). Point imaging collects point-images as relatively smaller collections of one or more pixels, collecting image data for larger areas by progressing, as illustrated, from left to right (904a), then up (906a), then again left to right, and so forth, via relative movement of the imager 902a and the collection area, such as in discrete point-and-shoot operation. Area imaging collects area-images as relatively larger collections of pixels, such as in a rectangular (e.g., square) shape. Area image collection progresses similarly to that of point imaging, by progressing, as illustrated, from left to right (904b) , then up (906b), then again left to right, and so forth, via relative movement of the imager 902b and the collection area, such as in discrete point-and-shoot operation. Line imaging collects line-images as collections of pixels corresponding to a rectangular region of a relatively high aspect ratio, such as a single pixel high and several pixels wide corresponding to the collection area width. Line image collection progresses a line at a time in a direction orthogonal to the line (904c), via relative movement of the imager 902c and the collection area. Some implementations of line imaging correspond to discrete point-and-shoot operation. Some implementations of line imaging correspond to continuous scanning operation. Some implementations of continuous scanning operation are performed using Time Delay Integration (TDI).

In some implementations, an image for training and/or enhancement corresponds to data of a single collected image. For example, a single area-image corresponds to an image for training and/or an image for enhancement. In various implementations, images for training and/or images for enhancement are produced by combining and/or splitting the collected image data. For example, several images (such as several point-images, several area-images, or several line-images) corresponding to a rectangular area (such as a flow cell tile) are combined into a single image for training or a single image for enhancement. For another example, portions of line-images corresponding to a contiguous rectangular area are split and then combined into a single image for training or a single image for enhancement.

In various implementations, the collection area is as wide (left-to-right in the figure) as a tile of a flow cell or alternatively as wide as a lane of a flow cell. According to various implementations, a single lane of a flow cell is imaged at a time (e.g., via a single imager having a single camera per wavelength or a single camera per exposure time) or a plurality of lanes of a flow cell is imaged in parallel (e.g., via parallel use of a corresponding plurality of imagers). According to various implementations, a single imager is operated at a time or a plurality of imagers is operated at a time.

In various implementations, the imager uses microscopy technology, such as optical microscopy.

In some implementations, a variation of area imaging uses an area sensor that is coplanar with the collection area and there are minimal optical components between fluorescing fluorophores and the area sensor. An example area sensor is based on semiconductor technology, such as a Complementary Metal-Oxide Semiconductor (CMOS) chip.

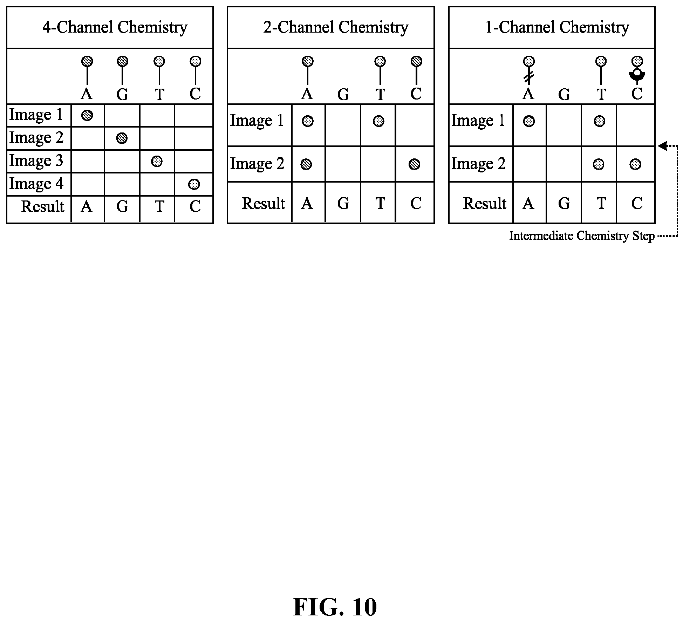

**FIG. 10** illustrates various sequencing image channel chemistry techniques. A 4-channel chemistry technique uses a channel per base (A, G, T, and C) per sequencing cycle. For example, imaging is performed at each of four wavelengths for each of the four bases (A, G, T, and C), illustrated as Images 1, 2, 3, and 4 in the figure. A 2-channel chemistry technique uses two channels per sequencing cycle and decodes results from the two channels into individual base identifications. For example, imaging is performed at each of two wavelengths and decoded as illustrated for Images 1 and 2. A 1-channel chemistry technique uses one channel two times separated by an intermediate chemistry step for each sequencing cycle. For example, imaging is performed at a particular wavelength, the intermediate chemistry step is performed, and then imaging is performed again at the particular wavelength.

### Paired Image Collection at Cycle Intervals

In any of the training contexts of **FIG. 1****,** **FIG. 3****,** **FIG. 4** and **FIG. 5****,** the more closely sequence data in the training context emulates the ground truths of sequence data in the production context, the more accurate trained model parameters implemented in a production AI model will be in predictively generating sufficiently enhanced images for base calling. To that end, reduced power images obtained in a training context should correspond closely in quality to that of the reduced power images generated for AI enhancement in the production context. Similarly, the unreduced power images obtained in the training context should model an enhanced image with quality closely corresponding to that of an unreduced power image.

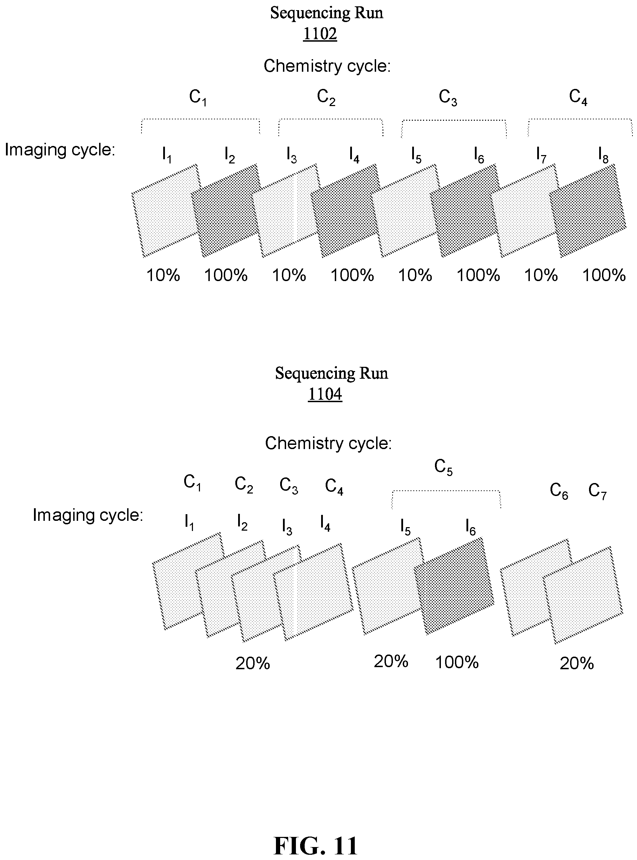

FIG. 11, illustrates an example of a sequencing run 1102 in which a paired reduced power image (10% power) and an unreduced power image (100% power) of the same sample target are obtained every cycle during the sequencing run 1102. Such an imaging cycle may require the use of an excitation power above a certain power threshold (e.g., unreduced power) more frequently than needed to properly train the AI for image enhancement. The generation of paired images at every cycle may generate a higher amount of training data, but the frequent imaging using the unreduced power may cause greater photodamage and ultimately become less beneficial in training the AI in later cycles of the sequencing run 1102. The result of the photodamage caused by generation of paired images at every cycle may ultimately affect the ability of the AI to properly enhance images during production due to the images being input into the AI during production failing to be similarly affected.

In certain embodiments, training data and production data are obtained under identical conditions- the same instruments, channel chemistries, image cycles, and photon budget. However, because training data obtained through paired image collection, as described herein, may require target imaging at both unreduced and reduced power, the photon budget for paired image sequencing may be significantly higher than that of individually generating reduced power images or unreduced power images in production sequencing. Thus, the loss of Signal-to-Noise Ratio (SNR), as a measure of the quality of the data of a signal of interest, may cascade more steeply and after fewer cycles during paired image sequencing than the loss of optical SNR occurring during production sequencing. In that regard, training data may not appropriately emulate interdependent ground truths pertaining to photodamage and optical SNR in production data. As a consequence, a production AI model may implement model parameters insufficiently calibrated to enhance reduced power images to match the quality of unreduced power images in production.

To address this disparity between training and production data, and thus better align training data obtained through paired image collection with ground truths of acquired photodamage in production data, while also limiting the photodamage during training and production to produce images having a higher optical data quality (*e.g.,* as measured by SNR or otherwise), some implementations may perform paired image collection at cycle intervals. Here, rather than performing paired reduced power and unreduced power imaging at each cycle-a 1:1 paired image to cycle interval-example implementations may perform paired imaging at cycle intervals greater than 1:1. In one example, a system may reduce power imaging during cycles between cycle intervals of paired imaging. Under some circumstances, reduced power imaging between cycle intervals may be performed to avoid biasing the model value for photo budget features of training data below the actual value of the feature in ground truth, e.g., accounting for actual photodamage and/or phasing/prephasing in production.

According to example implementations, the particular cycle interval may depend on the number of paired images required in a given training context. The amount of training data may be increased by the number of paired images that are produced for training the AI. However, the amount of photodamage may increase and, as a result, the optical resolution (*e.g*., as measured by SNR or otherwise) may decrease as the number of paired images that are produced increases. Particularly as the number of unreduced power images or images are produced as a result of an excitation power above a certain power threshold.

The particular cycle interval may also or alternatively depend on the threshold excitation power setting for obtaining reduced power images, and/or the threshold excitation power setting for obtaining unreduced power images for a given instrument. A lower excitation power setting for obtaining reduced and/or unreduced power images may help prevent photo damage, particularly in later cycles. However, the lower the excitation power setting for obtaining the reduced power images, the longer the training process may be for training the AI due to the reduced optical SNR at which images may be captured. Thus, the lower the excitation power setting may be set to a threshold (*e.g.,* between 10% and 50%, such as 10%, 15%, 20%, 25%, 30%, 35%, 40%, 45% or 50%) to produce a reduced power image of at least a predefined optical SNR for reducing training time and providing sufficient enhancement for production, while also limiting the photodamage described herein. As will be understood the excitation power setting for the reduced power images may be adjusted for later cycles (*e.g.,* predefined cycles) and/or for different systems (*e.g.,* different imaging systems). In order to ensure the optical SNR of the enhanced image generated during production is high, the threshold excitation power setting for obtaining unreduced power images may remain at 100% or at another relatively high threshold (*e.g.,* 85%, 90%, 95%) to ensure a certain level of optical SNR.

In one example, systems operating in a training context may generate paired images for a 150 base pair read-length cycle. The system may obtain reduced power images at a predefined percentage of the unreduced power images. For example, the system may obtain reduced power images at a 3x, 4x, or 5x reduction in excitation power for unreduced power images in order to train a model to predictively generated enhanced images of sufficient optic resolution for base calling. The paired imaging may be performed at a cycle interval that is based on the power reduction. For example, the system may obtain reduced power images at a 5x reduction in excitation power for unreduced power images at a 1:5 cycle interval. This particular example is illustrated in FIG. 11, in which a paired reduced power image (20% power) and an unreduced power image (100% power) of the same sample target are obtained every five cycles (C5) during a sequencing run 1104, where reduced power imaging is performed between cycle intervals (C1, C2, C3 . . . C4, C6, C7). Example intervals of 1:2, 1:3, 1:4, or 1:5 are contemplated herein. However, any maximum cycle interval allowed by a given number of paired images required in a training context at a suitable excitation power for reduced power imaging is contemplated herein. The number of reduced power imaging cycles that are performed prior to a paired imaging cycle that includes the unreduced power image may assist in replicating the amount of photodamage that may be caused by the production system operating at a reduced power over the entirety of a sequencing run. By reducing the number of unreduced power images, the difference in the amount of photodamage between the training data and the input data during production may be reduced.

Example excitation power settings of 2x, 3x, 4x, or 5x reduction of unreduced power may be implemented by a system for reduced power imaging. However, setting excitation power for reduced power imaging may be based on any number of factors. For example, the lower limits of excitation power may be determined based on extrinsic constraints in the training or production contexts: *e.g.,* the sequencing instrument (e.g., Numerical Aperture (NA) objective value of the instrument lens), imaging sensor noise floor, flow cell densities, AI model data requirements. The lower limits of excitation power may also be determined based on maximization of net photo budget effects. As an example, 10x reduction in excitation power set for reduced power imaging (see, e.g., FIG. 11, sequencing run 1102) will have an improved net photo budget effect over a 5x reduction in excitation power (e.g., sequencing run 1104), but only if a 1:5 cycle interval can be supported at the 10x reduction setting-i.e., training data generated at a 1:5 cycle interval at 10x reduction is sufficient to train an AI model herein. If, on the other hand, a 10x reduction can only support a 1:1 cycle interval (as illustrated in the example of sequencing run 1102) the 10x reduction in excitation power will not have an improved net photo budget effect over a 5x reduction in excitation power.

In some implementations, paired imaging may be performed dynamically, in which either or both of the cycle interval and reduced excitation power setting for reduced power images may be adjusted during a sequencing run. The adjustment of the cycle interval and/or the reduced excitation power setting may be made at one or more predefined portions of the sequencing run. For example, during the early cycles of a sequencing when imaging is obtained at relatively high SNR compared to later cycles, the imaging may be performed at the highest cycle interval at lowest reduced excitation power supporting the interval. Under certain circumstances, imaging at optimal cycle interval and reduction excitation in the earlier cycles, flattens the curve of logarithmic decline of the quality of data of a signal of interest caused by acquired photodamage. Then, during the later cycles of sequencing where relatively low SNRs may no longer support imaging at optimal cycle interval and reduced excitation, an adjustment is made to reduce the cycle interval, increase excitation, or both.

### Synthetic Reduced Power Images

As an alternative or complimentary strategy to paired imaging at cycle intervals in addressing disparities in photon budgeting between training and production data, some implementations generated paired image training data based on real unreduced power images and corresponding synthetic reduced power images synthesized through computational degradation of respective real unreduced power images. **FIG. 8** illustrates a process 800 of computationally degrading a real unreduced power image to obtain a paired synthetic reduced power image. A first element of a pair of images of a same flow cell tile is collected by imaging at the unreduced power, producing the unreduced power image of the pair of images. Then the unreduced power image is processed to produce a synthetic reduced power image that is the reduced power image of the pair of images.

In some implementations, the synthetic image is produced as follows. At 802, each pixel of the unreduced power image is processed by converting intensity of the pixel to an equivalent number of photons. Then, at 804,the number of photons is scaled by a scalar value. Then, at 806, an assumed rate equal to the scaled number of photons is used to resample from a Poisson distribution. Then, at 808, read noise is added to the result of the resampling. Lastly, at 810, the result of the adding is converted from a number of photons to a corresponding pixel intensity. The processed pixels of the unreduced power image form a synthetic reduced power image of the pair of images. Table 1 presents results of Real Time Processing (RTA) software analysis of performance of a U-Net based model trained using synthetic reduced power image data (U-Net + RTA) versus non-AI enhanced control run (RTA). For both U-Net + RTA and RTA sequencing runs an identical PhiX control was used as the sequencing sample and both sequencing runs were performed on an internal system with blue-green two-channel chemistry. Results demonstrate improved error rates (R1, R2) of the U-Net + RTA runs versus RTA runs with slight increase in Pass Filter (PF), a throughput metric representing a ratio of the number of clusters that meet a quality threshold to total number of wells.

**Table 1**

| | **PF** | **R1 Error Rate** | **R2 Error Rate** |
|---|---|---|---|
| **RTA** | 62.58% | 0.319% | 0.719% |
| **U-Net + RTA** | 63.77% | 0.264% | 0.574% |
| **U-Net Change** | +1.9% | -17.2% | -20.1% |

In certain implementations, synthetic reduced power images may be generated channel-wise, where, for example in two-channel chemistry, synthetic reduced power images are generated from each of the green-channel and red-channel high resolution images of a given cycle. Alternatively, synthetic reduced power images may be generated as single images per cycle from single integrated high-resolution images of merged channel images.

### Neural Network Implementations

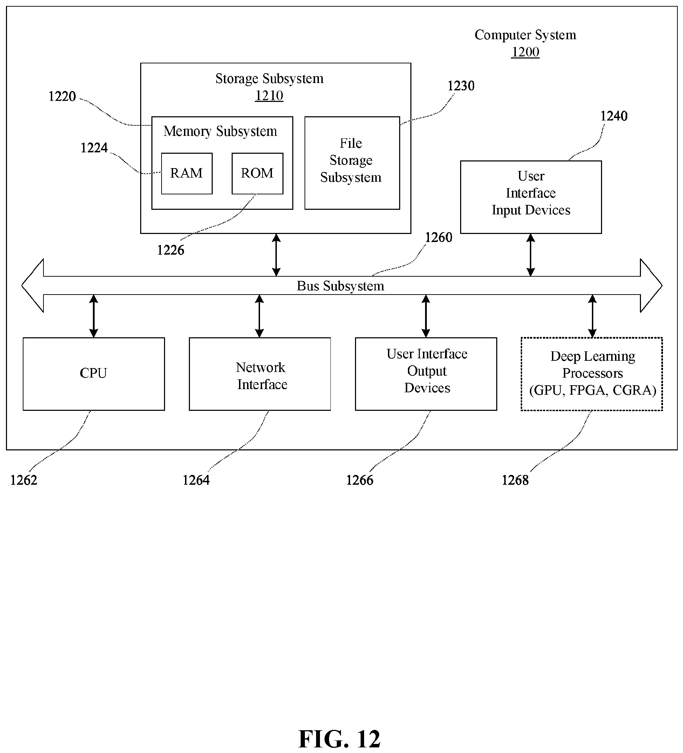

**FIG. 12** is a block diagram of an example computer system. The computer system comprises a storage subsystem 1210, user interface input devices 1240, a CPU 1262or other processor, a network interface 1264, user interface output devices 1266, and optional deep learning processors 1268 (illustrated for brevity as GPU, FPGA, CGRA) interconnected by a bus subsystem 1260. The storage system comprises a memory subsystem 1220 and a file storage subsystem1230. The memory subsystem 1220 comprises Randomly Accessible read/write Memory 1224 (RAM) and Read Only Memory 1226 (ROM). The ROM 1226 and file storage subsystem1230 elements comprise non-transitory computer readable media capabilities, e.g., for storing and executing programmed instructions (e.g., when executed by the CPU 1262 or other processor) to implement all or any portions of NN sections described elsewhere herein. The deep learning processors 1268 are enabled, according to various implementations, to implement all or any portions of the subject matter described herein, including the NN sections described elsewhere herein. In various implementations, the deep learning processors element comprises various combinations of CPUs, GPUs, FPGAs, CGRAs, ASICs, ASIPs, and DSPs.

In various implementations, one or more of the laboratory instruments and/or the production instruments described elsewhere herein comprise one or more computer systems identical to or similar to the example computer system of the figure. In various implementations, any one or more of the training and/or production contexts use any one or more computer systems identical to or similar to the example computer system of the figure to perform NN-related processing, operating, e.g., as one or more servers relating to training data collection and/or synthesis, as well as production data collection and/or processing, such as image enhancement.

In various implementations, the memory subsystem 1220 and/or the file storage subsystem 1230 are enabled to store parameters of NNs, such as all or any portions of parameters of NN sections described elsewhere herein. For example, all or any portions of the stored parameters variously correspond to any combination of initialized parameters of a NN used in a training context, trained parameters of the NN used in the training context, and/or trained parameters of a NN used in a production context. For another example, all or any portions of the stored parameters correspond to one or more intermediate representations, such as relating to information that is provided by a training context to a production context, as illustrated and described elsewhere herein.

For a first specific example, at least some of the stored parameters correspond to information provided by the training NN Generator (G) to the production NN Generator (G) (132 and 134) as illustrated by Trained Generator Filter Info 142 of **FIG. 1****.** For a second specific example, at least some of the stored parameters correspond to information retained in the Generator Stage 432 after training in the training context for use in production in the production context as illustrated in **FIG. 4****.** For a third specific example, at least some of the stored parameters correspond to information provided by the training context to the production context as illustrated by Trained Encoder / Decoder Filter Info 542 of **FIG. 5****.** For a fourth specific example, at least some of the stored parameters correspond to information provided by the training context to the production context as illustrated by Trained G_{R->U} Filter Info 640 of **FIG. 6****.**

In various implementations, a controller (such as the controller described with respect to **FIG. 3****)** comprises one or more elements similar to the example computer system illustrated in **FIG. 12****,** such as to store and execute programmed instructions to implement all or any portions of NN sections described elsewhere herein and/or to store parameters of NNs.

In various implementations, a simulation system operates a sequencing model based on simulated parameters emulating ground truth (real) sequencing data for synthesizing data sets for input in any of the training contexts, e.g., of **FIG. 1****,** **FIG. 4****,** or **FIG. 5****.** In certain example implementations, simulated parameters are tuned to emulate sequencing data reflecting one or more grounds truths that may correspond to a predictive performance variable and may include, for example, sequencing data reflecting the errors, biases, and artifacts inherent to sequencing processes. For example, some simulated parameters may be tuned to emulate sequencing data reflecting one or more ground truths of clonal populations of clustered nucleic acid samples on a flow cell substate, e.g., base substitutions, indels, read duplication, polyclonality, cross-talk. Other simulated parameters may be tuned to emulate sequencing data reflecting one or more grounds truths of sequencing clonal populations of clustered nucleic acid samples on a flow cell substate, e.g., phasing, prephasing. Still other simulated parameters may be tuned to emulate sequencing data reflecting one or more grounds truths of imaging clonal populations of clustered nucleic acid samples on a flow cell substate, e.g., TDI jitter, PSF, dark noise. Parameters implemented in a sequencing model herein may be developed based on validated assumptions or parameterized from actual data; a sequencing model herein may implement a combination of such parameters. Simulated data of the sequencing model may emulate orthogonal single events captured in sequencing data, e.g., base substitutions, as well as interdependent features of data that behave according to non-linear decay or growth functions across a given sequencing run, e.g., SNR from cumulative photodamage. Other parameters may include, without limitation, noise from surface structures; shot noise; flow cell patterning, e.g., nanowell distribution, depth, diameter, pitch/pitch ratio; genome source; cluster size distribution; optical distortion; imaging sensor size; optical magnification; image bit depth; ratio of populated to unpopulated functionalized sites (e.g., wells); functionalized site intensities (mean and standard deviations); Non-specific sample capture; structured illumination, i.e., structured illumination microscopy (SIM); fiducial geometry and placement.

Simulation as described herein enables generation of datasets of virtually unlimited size with precise control over introduced variables. Thus, for example, a sequencing model herein may be implemented to predictively simulate sequencing in the absence of acquired photodamage in order to generate simulated data having a feature of SNR characterized by a linear, rather than logarithmic, decay function. The simulation system may artificially add noise to the sequencing data, including, for example, adding noise to simulated unreduced power images to obtain simulated reduced power images in accordance with the procedure of FIG. 8. A sequencing model herein may also introduce one or more variables corresponding to more or more instrument settings, where the model may be run in parallel at two or more value inputs. For example, a sequencing model herein may introduce a variable corresponding to a excitation power of the instrument, where the model may generate a first dataset at first value input corresponding to imaging under an unreduced power level and second data set at different second value input corresponding to imaging under a reduced power level, and where the first and second datasets may be input to any of the training contexts, e.g., of FIG. 1, FIG. 4, or FIG. 5.

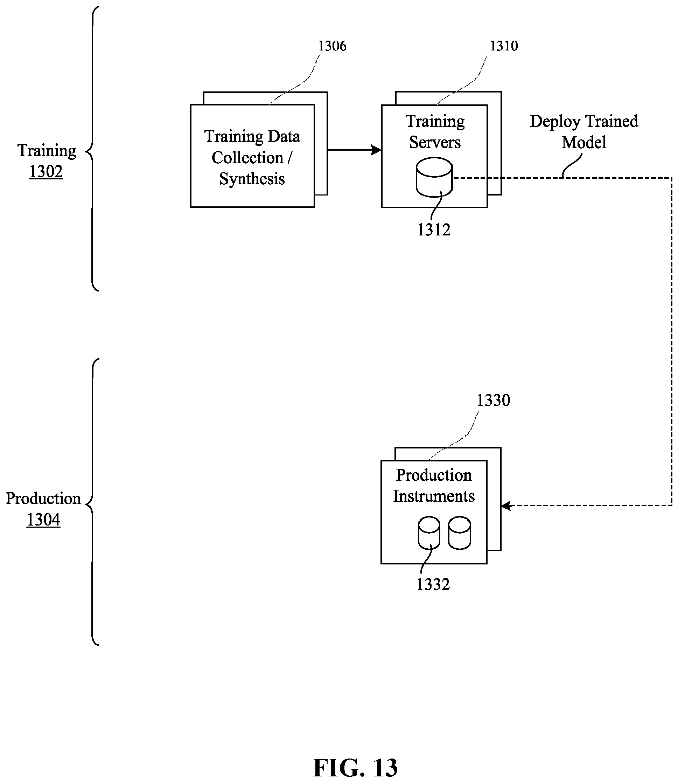

FIG. 13 illustrates training and production elements implementing Al-driven signal enhancement of sequencing images. The upper portion of the figure illustrates one or more training contexts 1302, and the lower portion illustrates one or more production contexts 1304. Each of the training contexts comprises one or more training data collection / synthesis capabilities 1306, each with a respective one or more training servers 1310. Each of the training servers is enabled to store respective training data in storage subsystem 1312, such as parameters resulting from training via one or more NN-related activities. In some implementations, all or any portions of one of the training contexts corresponds to a laboratory instrument (not illustrated). Each of the production contexts comprises one or more production instruments 1330. Each of the production instruments is enabled to store production data in storage subsystem(s) 1332.

Referring to FIG. 12, in various implementations, the memory subsystem 1220 and/or the file storage subsystem 1230 are enabled to store image data, such as reduced power images, unreduced power images, and enhanced images, as well as representations thereof, such as pixel intensities of one or more regions of images. In various implementations, the computer system 1200 is enabled to process images in real time, including extracting intensities of specific pixels in real time. In some implementations based on real time pixel intensity extraction, all or any portions of image data corresponding to extracted areas are not specifically saved in the file storage subsystem 1230.

Referring again to FIG. 13, the training contexts 1302 of the figure are representative of various training contexts illustrated and described elsewhere herein. The production contexts 1304 of the figure are representative of various production contexts illustrated and described elsewhere herein. The training contexts use training data that is collected and/or synthesized to train one or more models. Then results of the model training are provided, as illustrated by the dashed arrow Deploy Trained Model, to the production contexts for us, e.g., to enhance production images for improved base calling.

As a first specific example, one of the training contexts of FIG. 13 corresponds to the training context of FIG. 1 and a corresponding one or more of the production contexts of FIG. 12 corresponds to one or more instances of the production context of FIG. 1. The Deploy Trained Model of FIG. 13 corresponds to the Trained Generator Filter Info 142 of FIG. 1. As a second specific example, one of the training contexts of FIG. 13 corresponds to the training context of FIG. 4 and a corresponding one or more of the production contexts of FIG. 13 corresponds to one or more instances of the production context of FIG. 4. The Deploy Trained Model of FIG. 13 corresponds to providing training results (e.g., one or more parameters) of the training usage of the Generator Stage 432 of FIG. 4 to one or more instances of the production usage of the Generator Stage 432 of FIG. 4. More specifically, a particular laboratory instrument configured according to the training context of FIG. 4 operates according to the training context of FIG. 12. Several production instruments each configured according to the production context of FIG. 4 operate according to the production context of FIG. 13, including receiving results of training the particular laboratory instrument according to the Deploy Trained Model of FIG. 13.

### Fiducials

An example of a fiducial is a distinguishable point of reference in or on an object. E.g., the point of reference is present in an image of the object, is present in a data set derived from detecting the object, or any other representation of the object suitable to express information about the point of reference with respect to the object. The point of reference is specifiable by an x and/or y coordinate in a plane of the object. Alternatively, or additionally, the point of reference is specifiable by a z coordinate that is orthogonal to the x-y plane, e.g., being defined by relative locations of the object and a detector. One or more coordinates for a point of reference are specifiable relative to one or more other features of an object or of an image or other data set derived from the object.

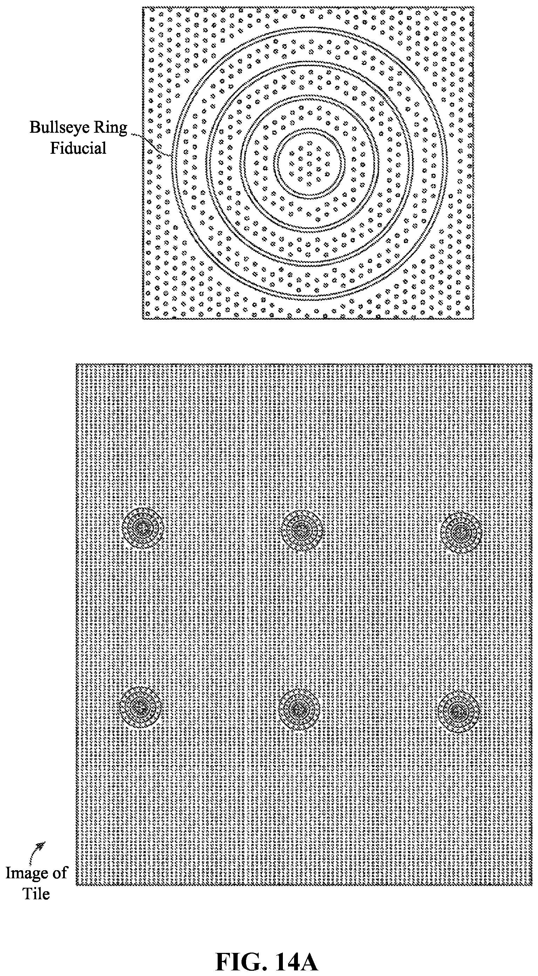

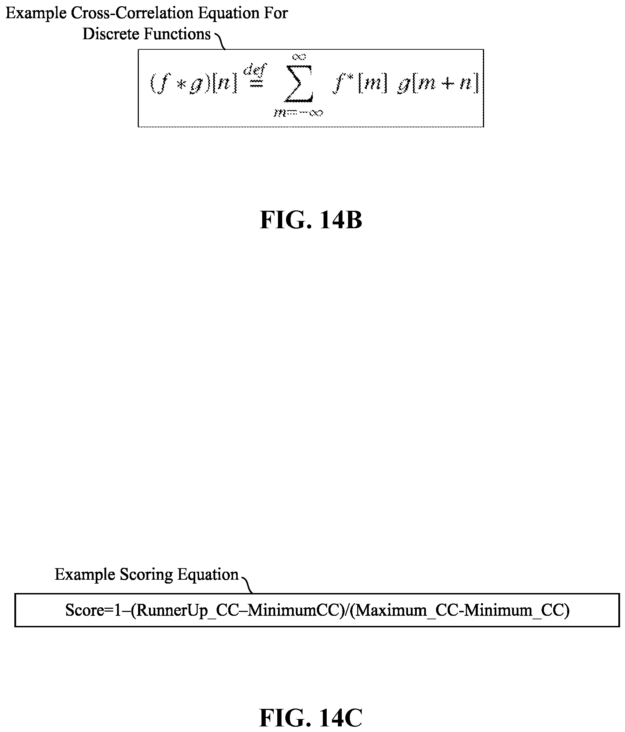

**FIG. 14A** illustrates fiducial examples. The upper portion of the figure is a close-up of a single fiducial having four concentric bullseye rings. The lower portion of the figure is an image of a tile with six example bullseye ring fiducials in the image. In various implementations, each of the dots throughout represent a respective oligo cluster, a respective nanowell of a patterned flow cell, or a respective nanowell with one or more oligo clusters therein. In some implementations, the bullseye ring fiducials comprise light rings surrounded by a dark border, such as to enhance contrast. The fiducials are usable as reference points for aligning the imaged tile, such as with other images of the same tile (e.g., at various wavelengths and/or as another image of a pair of images of the same tile). For example, locations of fiducials in the image are determined via cross-correlation with a location of a reference virtual fiducial and determining the location as where the cross-correlation score is maximized. In some implementations, the cross-correlation is performed using a cross-correlation equation for discrete functions (see, e.g., **FIG. 14B****).**

The fiducials are usable as reference image data (e.g., ground truth image data) according to various implementations as described elsewhere herein. In some implementations, a measure of goodness of a fit between a fiducial in an image and a virtual fiducial is calculated using a scoring equation (see, e.g., **FIG. 14C****).** In various implementations, various image alignment operations (such as aligning of elements of paired images) use information based on evaluating one or more cross-correlation equations (e.g., such as illustrated in **FIG. 14B****)** and/or one or more scoring equations (e.g., such as illustrated in **FIG. 14C****).** In various implementations, various fiducial loss functions use information based on evaluating one or more cross-correlation equations (e.g., such as illustrated in **FIG. 14B****)** and/or one or more scoring equations (e.g., such as illustrated in **FIG.** 14C). In various implementations, various fiducial quality assessments use information based on evaluating one or more cross-correlation equations (e.g., such as illustrated in **FIG. 14B****)** and/or one or more scoring equations (e.g., such as illustrated in **FIG.** 14C).

**FIG. 14B** illustrates an example cross-correlation equation for discrete functions. The example cross-correlation equation is usable, e.g., to determine locations of fiducials (see, e.g., **FIG. 14A****)** using an example scoring equation (see, e.g., **FIG.** 14C).

**FIG. 14C** illustrates an example scoring equation. In the example scoring equation, Minimum_CC is the maximum value of the cross-correlation, Maximum_CC is the maximum value of the cross-correlation, and RunnerUp_CC is the largest cross-correlation value outside a radius of, e.g., four pixels from the location of the Maximum_CC.

### Fine Tuning - Laboratory to Production

In some usage scenarios, an AI model trained on a laboratory sequencing instrument, when used on a production sequencing instrument, leaves room for improvement. In some implementations, fine tuning is performed by tailoring the laboratory trained model to a production context by performing a few training iterations on the production instrument. In some implementations, flow cells include precisely manufactured fiducials having precisely known shapes and dimensions. Conceptually, the training iterations on the production instrument use the precisely known shapes and dimensions of the fiducials as ground truth with respect to image data of fiducials as collected by the production instrument.

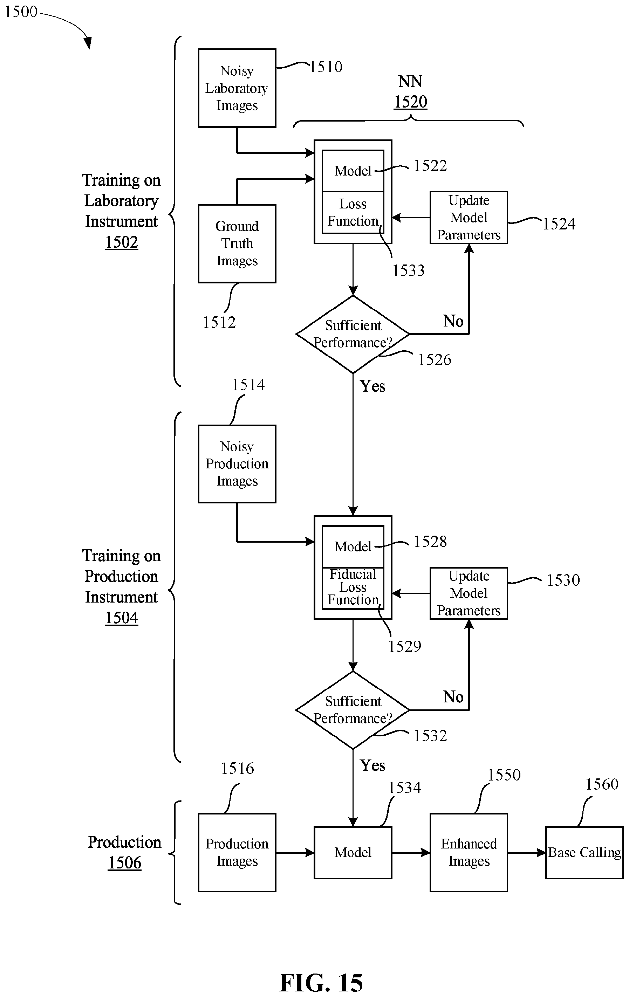

**FIG. 15** illustrates a system 1500 implementing training specific to production instruments, beginning with training on a laboratory instrument. From top to bottom, the figure illustrates a laboratory instrument training context 1502, a production instrument training context 1504, and a production context 1506. Each of the AI models in the laboratory instrument training context (1552), the production instrument training context (1528), and the production context (1534) is of a same NN architecture. From left to right the figure illustrates an image collection section, a NN section (1520), and a base calling section.

The laboratory training context (Training on Laboratory Instruments) corresponds, e.g., to using a laboratory sequencing instrument for training based on paired images. The laboratory training is performed until it produces an AI model having enough accuracy (as illustrated by Sufficient Performance? 1526 of the laboratory training context). An associated loss function 1523 is usable in part to update parameters (Update Model Parameters 1524) of the AI model (such as via gradient update and/or gradient descent techniques) until there is sufficient performance. The production training context (Training on Production Instruments 1504) corresponds, e.g., to using a production instrument for fine-tuning training based on images from a production sequencing instrument and fiducial ground truth data. The production training is performed until it produces a (production instrument context) fine-tuned AI model 1528 having enough accuracy (as illustrated by Sufficient Performance? 1532 of the production training context). An associated fiducial loss function 1529 is usable in part to update parameters (Update Model Parameters 1530) of the fine-tuned AI model (such as via gradient update and/or gradient descent techniques) until there is sufficient performance. The fine-tuning training begins with model parameters resulting from training the laboratory training context AI model 1522. The production context (Production) corresponds, e.g., to using a production sequencing instrument with the fine-tuning training AI model 1528 to enhance production images for base calling 1560. The production context uses the production instrument context fine-tuned AI model 1528.

The laboratory training context uses paired images such as one image taken of a tile of a flow cell at a reduced laser excitation power (one of a plurality of images represented by Noisy Laboratory Images 1510) paired with another image taken of the tile at an unreduced laser excitation power (one of a plurality of images represented by Ground Truth Images 1512). The production training context uses unpaired images taken at the reduced laser excitation power (Noisy Production Images 1514). The production context uses singleton images taken at the reduced laser excitation power (Production Images 1516). The production images are enhanced in the production context via production model 1434 to produce enhanced images 1550 for use in base calling 1560.

In some implementations, the laboratory training context operates for a relatively large number of training iterations, taking, e.g., days or weeks of time for completion. In some implementations, the production training context operates for a relatively small number of training iterations, taking, e.g., minutes or hours of time for completion.

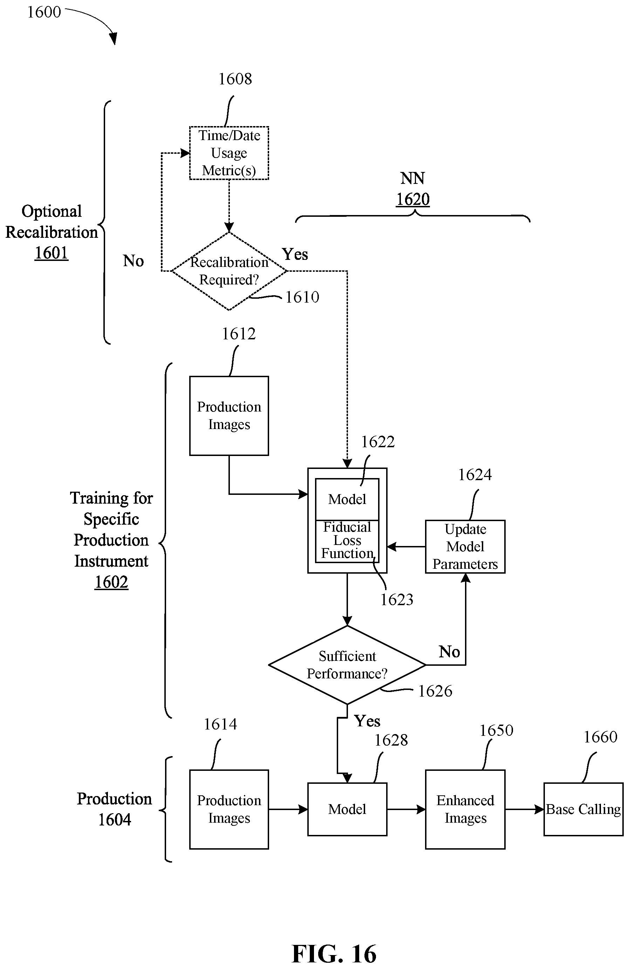

**FIG. 16** illustrates a system 1600 implementing training for a specific production instrument, optionally responsive to a recalibration requirement detection. From top to bottom, the figure illustrates optional recalibration 1601, a production instrument training context 1602, and a production context 1604. The AI model 1622 in the production instrument training context and the AI model 1628 in the production context are of a same NN architecture 1620. From left to right the figure illustrates a combined optional recalibration and image collection section, a NN section, and a base calling section.

The production instrument training context (Training for Specific Production Instrument 1602) corresponds, e.g., to using a particular production sequencing instrument for self-training based on images from the particular production sequencing instrument and fiducial ground truth data. The training begins with model parameters resulting, e.g., from training on a laboratory AI model such as in a laboratory training context. The production training is performed until it produces an AI model 1622 having enough accuracy (as illustrated by Sufficient Performance? 1626) for use in the production context on the particular production sequencing instrument. An associated fiducial loss function 1623 is usable in part to update parameters (Update Model Parameters 1624) of the model (such as via gradient update and/or gradient descent techniques) until there is sufficient performance. In the production context, production images 1614 are enhanced by a production model 1628 that uses parameters determined by the production training to the specific production instrument. The production images are enhanced in the production context to produce enhanced images 1650 for base calling 1660.

Optionally, monitoring for a recalibration event is performed. Recalibration events include and/or are based upon, e.g., any combination of a particular date, a particular time, passage of a specific amount of time (such as a recalibration interval), usage metrics, and/or monitored performance characteristics (Time/Date Usage Metric(s) 1608). The monitoring comprises determining whether to perform recalibration (Recalibration Required? 1610). If required, then the production training is performed. If not, then monitoring for a recalibration event resumes.

### Ensemble of AI Models

In some scenarios, various noise sources (e.g., photobleaching, photodamage, wear-out, phasing, and/or prephasing) are cumulative over time. Thus, the first sequencing cycle has the least accumulated noise, and the last sequencing cycle has the most accumulated noise. Conceptually, relatively earlier sequencing cycles have relatively less accumulated noise compared to relatively later sequencing cycles. Due to the noise accumulation, enhancing a reduced power image is dependent on which sequencing cycle the reduced power image is associated with. Therefore, in some situations, an AI model trained using images from relatively early sequencing cycles, when used to enhance images from relatively later sequencing cycles, underperforms compared to an AI model trained using images from relatively later sequencing cycles, and vice versa. In some implementations, each of a plurality of AI models, associated with a respective sequencing cycle range, is used for enhancing reduced power images taken within the respective sequencing cycle range.

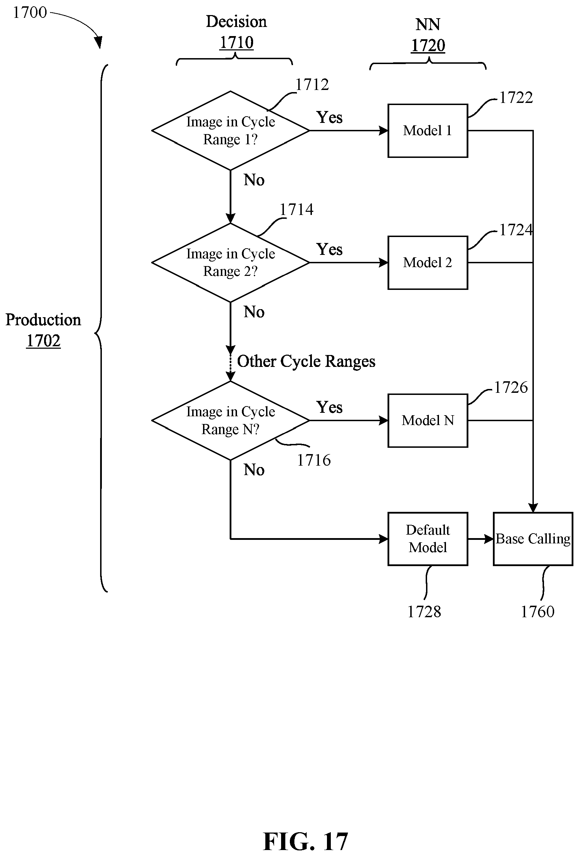

**FIG. 17** illustrates a system 1700 implementing an ensemble of AI models, one for each of a plurality of sequencing cycles. The entire figure illustrates a production context 1702 (such as using a production sequencing instrument). From left to right the figure illustrates a decision section 1710 (e.g., determining which range of cycles a particular cycle is in), a NN section 1720, and a base calling section 1760. For clarity, the training of the NN section is omitted from the figure.

As a specific example, Model 1 (1722) is trained using images from a first sequencing cycle range 1712, e.g., sequencing cycles 1-10, Model 2 (1724) is trained using images from a second sequencing cycle range 1714, e.g., sequencing cycles 11-19, and Model 3 (e.g., Model N 1726) is trained using images from a third sequencing cycle range (e.g., Image in Cycle Range N? 1716) , e.g., sequencing cycles 20-29. During production, responsive to the current sequencing cycle being of the first sequencing cycle range (e.g., being any of the 1^{st} through the 10^{th} sequencing cycles), Model 1 is used to enhance reduced power images. Responsive to the current sequencing cycle being of the second sequencing cycle range (e.g., being any of the 11^{th} through the 19^{th} sequencing cycles), Model 2 is used to enhance reduced power images. Responsive to the current sequencing cycle being of the third sequencing cycle range (e.g., being any of the 20^{th} through the 29^{th} sequencing cycles), Model 2 is used to enhance reduced power images. Responsive to the current sequencing cycle being of some other cycle range (e.g., being of the 30^{th} sequencing cycle or beyond), a Default Model 1728 is used to enhance reduced power images.

In some implementations, sequencing by synthesis provides indexed sequencing that enables multiple libraries to be pooled and sequenced together. A unique identifier, e.g., one or more index sequences, is added to samples during library preparation. During indexed sequencing, each of the index sequences is sequenced in separate index read operations (e.g., Index Read 1 and Index Read 2 operations). For example, a first plurality of bases is sequenced via a (non-index) Read 1 operation. Then an index is sequenced via an Index 1 Read operation, or alternatively a first index and a second index are sequenced respectively via an Index 1 Read operation followed by an Index 2 Read operation. Then a second plurality of bases is sequenced via a (non-index) Read 2 operation.

In some ensemble of AI model implementations, a Read 1 Model, an Index Read 1 Model, and a Read 2 Model, each corresponding to respective sequencing cycle ranges of the Read 1 operation, the Index 1 Read operation, and the Read 2 operation, are trained, and then used during production for each of the corresponding respective cycle ranges. In some implementations, the sequencing cycle ranges corresponding to the Read 1 operation, the Index 1 Read operation, and the Read 2 operation, are contiguous.

In some ensemble of AI model implementations, an Index Read 2 Model, corresponding to a sequencing cycle range of the Index 2 Read operation, is trained, and then used during production for the Index 2 Read operation sequencing cycle range, in addition to a Read 1 Mode, an Index Read 1 Model, and a Read 2 Model. In some implementations, the sequencing cycle ranges corresponding to the Read 1 operation, the Index 1 Read operation, the Index 2 Read operation, and the Read 2 operation, are contiguous.

In some implementations, Model 1, Model 2, Model N, and the Default Model are of a same NN architecture. In some implementations, each of Model 1, Model 2, Model N, and the Default Model is of a respective unique NN architecture. In various implementations, any one or more of the models are of various NN architectures.

### Graceful Failover

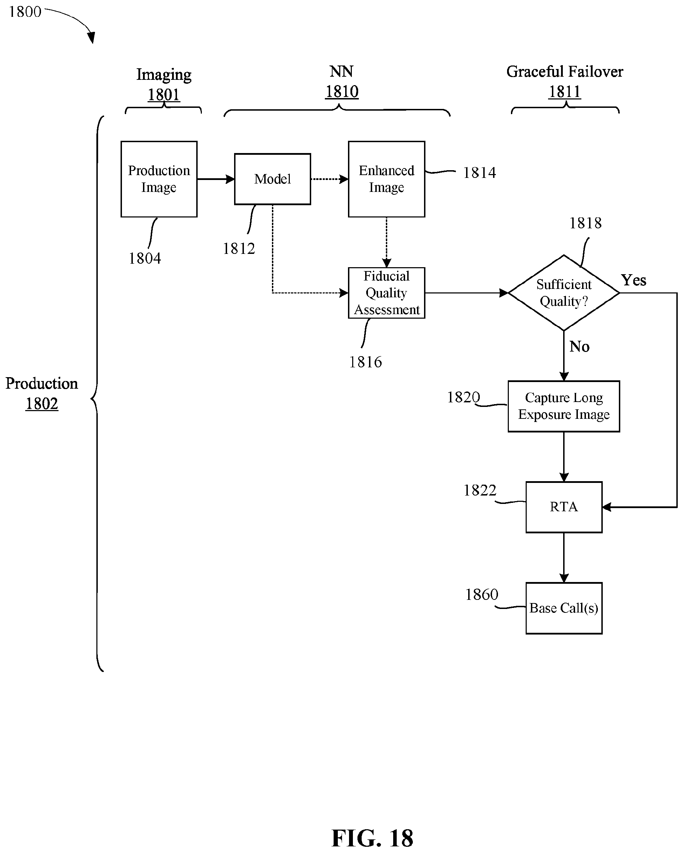

**FIG. 18** illustrates a system 1800 implementing a graceful failover from AI-driven enhancement of a reduced power image to an unreduced power image via capturing a long exposure image 1820. The entire figure illustrates a production context 1802 (such as using a production sequencing instrument). From left to right, the figure illustrates an image collection section 1801, a NN section1810, and a graceful failover section 1811. For clarity, the training of the NN section is omitted from the figure.

A production image 1804 is processed by a trained AI model 1812 to produce an enhanced image 1814 and information for a fiducial quality assessment 1816. The fiducial quality assessment 1816 also receives information of the enhanced image and determines a fiducial quality assessment result (sufficient quality 1818). The fiducial quality assessment result is compared, e.g., to a predetermined and/or dynamically determined threshold. If the result is greater than or equal to the threshold, indicating sufficient quality, then processing proceeds to Real Time Analysis (RTA) 1822 and one or more subsequent base calls based on the enhanced image. If the result is less than the threshold, indicating insufficient quality (e.g., the AI model has in some sense failed), then processing proceeds, at 1820, to capture a long exposure image of sample area imaged in the production image (e.g., a tile of a flow cell at a particular cycle). Then processing proceeds to RTA 1822 and one or more subsequent base calls 1860 based on the long exposure image (e.g., reverts to a non-AI mode of operation responsive to the AI model failure). The long exposure image is captured with an exposure time that is longer than the exposure time used to capture the (original) production image.

### Transfer Learning

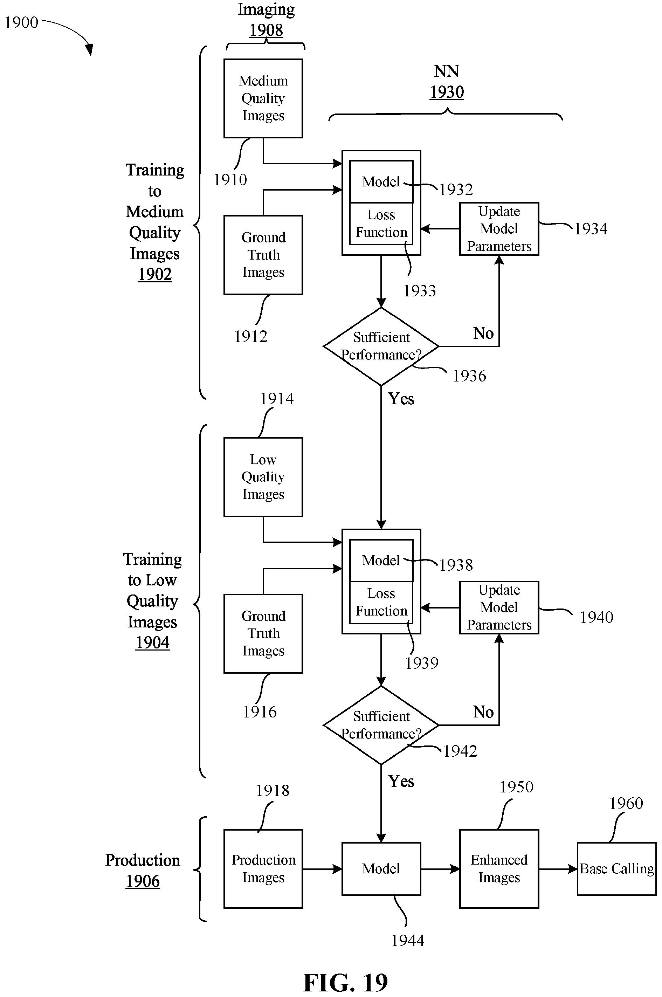

**FIG. 19** illustrates a process 1900 performing transfer learning from learning with medium quality images 1910 to learning with low quality images 1914. From top to bottom, the figure illustrates a training context 1902 (to medium quality images), a training context 1904 (to low quality images), and a production context 1906. Each of the AI models in the training to medium quality images context, the training to low quality images context, and the production context is of a same NN architecture. From left to right, the figure illustrates an image collection section 1908, a NN section 1930, and a base calling section 1960.

Processing begins by training a medium quality image AI model 1932 in the training to medium quality images context 1902. Parameters of the medium quality image AI model are initialized to starting values, e.g., randomly within a predetermined range and/or distribution. Medium quality images 1910 and ground truth images 1912 are processed by the medium quality image AI model. An associated loss function 1933 is usable in part to update the medium quality image AI model (such as via gradient update and/or gradient descent techniques) until there is sufficient performance.

Responsive to the sufficient performance of the medium quality image AI model 1932 (e.g., completion of training of the medium quality image AI model), processing proceeds to the low quality image AI model context 1904. Parameters of the low quality image AI model are initialized, e.g., based in whole or in part on the parameters of the (trained) the medium quality image AI model 1938, thus practicing a form of transfer learning. Low quality images 1914 and ground truth images 1916 are processed by the low quality image AI model. An associated loss function 1939 is usable in part to update the low quality image AI model (such as via gradient update and/or gradient descent techniques) until, at 1942, there is sufficient performance.

Responsive to the sufficient performance of the low quality image AI model 1938 (e.g., completion of training of the low quality image AI model), processing proceeds to the production context 1906. Parameters of a production AI model 1944 are initialized, e.g., based in whole or in part on the parameters of the (trained) low quality image AI model 1938. Production images 1918 (e.g., corresponding to quality of the low quality images used to train the low quality image AI model) are processed by the production AI model into enhanced images 1950 corresponding to quality of the medium quality images 1910 used to train the medium quality image AI model 1932. The enhanced images 1950 are then used, at 1960, to perform base calling.

As a specific example, the medium quality image AI model, the low quality image AI model, and the production AI model are all of a same NN architecture. The initializing of the starting values of the low quality image AI model is performed by copying from the parameters of the trained medium quality image AI model. The initializing of the parameters of the production AI model is performed by copying from the parameters of the trained low quality image AI model. Each of the copying of parameters corresponds conceptually to transferring trained filter information from the trained AI model to the AI model being initialized for subsequent training or production.

### Other Implementation Information

In various implementations, any one or more of the training contexts illustrated and/or described with respect to any of FIG. 15, FIG. 16, FIG. 17, FIG. 18, and/or FIG. 19 correspond to the training contexts of any one or more of FIG. **1****,** FIG. 4, FIG. 5, and/or FIG. 6. In various implementations, any one or more of the production contexts illustrated and described with respect to any of FIG. 15, FIG. 16, FIG. 17, FIG. 18, and/or FIG. 19 correspond to the training contexts of any one or more of FIG. 1, FIG. 4, FIG. 5, and/or FIG. 6.

As a specific example, techniques disclosed in FIG. 1 are applicable to the techniques disclosed in FIG. 15. For example, the training context of FIG. 1, as used with paired images, is applicable to the laboratory training context of FIG. 15. Continuing with the example, the training context of FIG. 1, as used with paired images and further training iterations, is applicable to the production training context of FIG. 15, with production images being used as Reduced Power Images and fiducial ground truth image data being used as Unreduced Power Images. Further continuing with the example, the production context of FIG. 1 is applicable to the production context of FIG. 15, with the Trained Generator Filter Info corresponding to results (e.g., updated parameters) of the fine tuning produced by the production training context.

FIGS. 21A-C collectively illustrate example equations relating to loss functions. FIG. 2A illustrates an example equation for an adversarial loss, such as a generator versus discriminator conditional-adversarial loss. FIG. 21B illustrates an example equation for an L1 loss function. FIG. 21C illustrates an example equation combining the adversarial loss function of FIG. 21A with the L1 loss function of FIG. 21C with a weighting parameter, lambda. In some implementations, the example equations illustrated in FIGS. 21A-C are application to a CGAN, such as illustrated and described with respect to FIG. 4.

In various implementations, any one or more of the fiducial loss functions and/or the fiducial quality assessment illustrated with respect to any of FIG. 15, FIG. 16, and/or FIG. 18 correspond to and/or are used by reward-based training to maximize an image quality score. In some implementations, an image quality assessment (e.g., such as based on any one or more of an FWHM of an image PSF, a focus quality score, a Brenner focus measure, a score from a pretrained discriminator such as operated to classify an image, and a score from a discriminator previously trained in a laboratory context) is used instead of and/or in addition to a fiducial quality assessment.

In various implementations, a single-image loss function (operable, e.g., solely with production reduced power images) is used instead of or in addition to any one or more of the fiducial loss functions and/or the fiducial quality assessment illustrated with respect to any of FIG. 15, FIG. 16, and/or FIG. 18. Examples of single-image loss functions are based on any combination of minimizing and/or reducing an FWHM value of an image PSF, a focus quality score (e.g., a Brenner focus measure), a score from a pretrained discriminator (e.g., operated to classify an image), and a score from a discriminator previously trained in a laboratory context.

In some implementations, metrology nanowells are included in a flow cell, e.g., nanowells spaced far from other nanowells, enabling efficient quantification of image quality of the metrology wells. Example metrology nanowell image quality measures include FWHM of PSF, intensity variation between metrology nanowells, and differences between expected and measured metrology nanowell locations. In some implementations, metrology nanowell image quality is usable as a basis for determining a single-image loss function. In various implementations, various metrology nanowell image quality measures are applicable to determining fiducial image quality and/or determining a fiducial quality assessment (e.g., as represented by the Fiducial Quality Assessment of FIG. 18).

In various implementations, a flow cell provides a solid surface, such as a substrate, for attachment of oligos. In some implementations, a flow cell is patterned with a plurality of concave features, referred to variously as wells, nanowells, and nanopores. The patterned flow cell is provided with a gel coating, such as selectively inside the wells and not elsewhere, to enable ready attachment of oligos selectively in the wells only. In some scenarios, usage of patterned flow cells with wells enables population of most of the wells with a single species of oligo.

In various implementations, the wells are arranged on the flow cell according to various patterns, such random or repeating. The repeating patterns result in patterning of the flow cell being similar throughout, such that various locations of the flow cell have similar patterning. Example repeating patterns include triangular, rectilinear, and hexagonal patterns. The wells themselves as well as patterning of the wells are characterizable according to one or more well patterning characteristics, such as one or more well dimensions and/or patterning thereof, well size (such as opening area, bottom area, and/or cavity volume), well spacing and/or pitch (such as interstitial distance between wells or patterning thereof), and/or well density (such as number of wells per unit area of a substrate). In some implementations, the well patterning characteristics include information relating to fiducials, such as location of wells compared to fiducial elements and/or components.

In various implementations, information relating to various combinations of the well patterning characteristics are provided to the NNs of any of the training contexts described elsewhere herein. For example, dimension information (e.g., relating to well opening size and/or well pitch) is provided during training to enable NN processing to determine where a cluster and/or well is to be imaged, such as resolving individual clusters and/or wells from a plurality of clusters and/or wells that would otherwise appear merged, e.g., in a blurry image.

In some implementations, collected and/or enhanced images correspond to full-sized images, e.g., encompassing an entire or a substantially entire field of view of an imager. In some implementations, collected and/or enhanced images correspond to less than full-sized images, e.g., encompassing less or substantially less than an entire field of view of an imager. In some implementations, collected and/or enhanced images correspond to respective patches of an original image collected by an imager, e.g., processing is via patches of input images.

In the foregoing descriptions of AI-driven signal enhancement of sequencing images (e.g., as illustrated by or described in relation to any of FIG. **1****,** FIG. 4, FIG. 5, FIG. 6, FIG. 15, FIG. 16, FIG. 17, FIG. 18, and/or FIG. 19 ), some example details are described with respect to implementations using CNN techniques. Other implementations use techniques in place of or in addition to CNN techniques, such as any combination of any one or more of the various examples of NNs described elsewhere herein. As a first specific example, with respect to FIG. 6, the generator elements and/or the discriminator elements are implemented at least in part using a fully connected NN. As a second specific example, again with respect to FIG. 6, the generator and/or the discriminator elements are implemented at least in part using one or more layers performing an attention operation. As a third specific example, with respect to FIG. 1, the Generator (G) and/or the Discriminator (D) are implemented at least in part using a transformer.

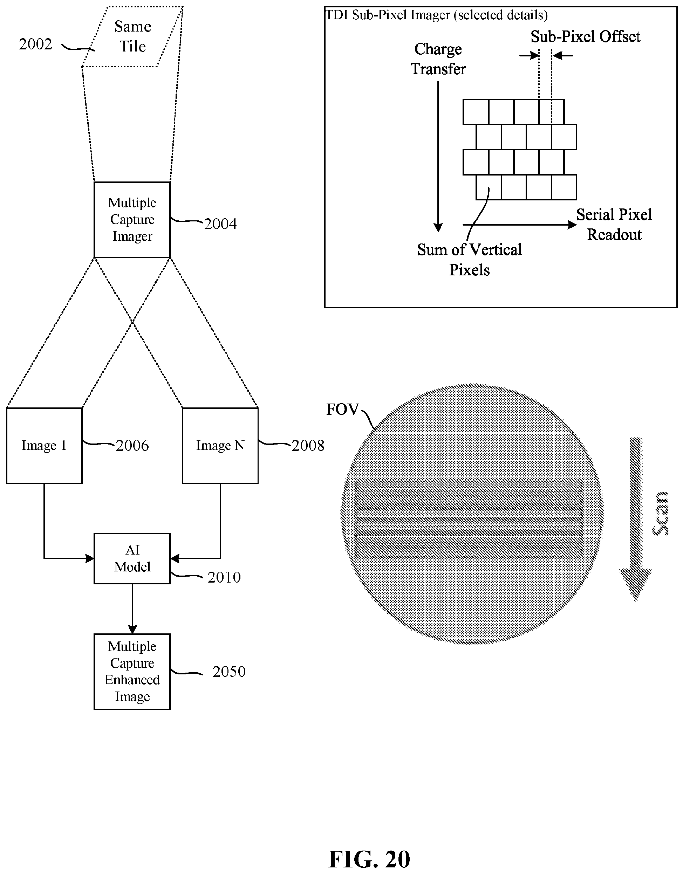

In various implementations, any one or more of the Model elements illustrated in any one or more of FIG. 15 (e.g., the laboratory instrument training Model, the production instrument training Model, and the production Model), FIG. 16 (e.g., the production instrument training Model and the production context Model), FIG. 17 (e.g., Model 1, Model 2, Model N, and the Default Model), FIG. 18 (e.g., the production Model), and FIG. 19 (e.g., the training to medium quality images Model, the training to low quality images Model, and the production Model), and FIG. 20 (e.g., the AI Model) are variously implemented via any one or more of a GAN (e.g., having a Generator and a Discriminator), an autoencoder, U-Net-based NN, a transformer and/or any combination of any one or more of the various examples of NNs described elsewhere herein.

### Time Delay Integration (TDI)

**FIG. 20** illustrates producing enhanced images by capturing multiple images of a same tile 2002 with a TDI sub-pixel imager (Multiple Capture Imager 2004) and then processing the multiple images (Image 1 (2006) - Image N (2008) with an AI model 2010. Multiple TDI sensors (e.g., with relatively fewer stages per sensor) are stacked along a scan direction to increase SNR by increasing total exposure time without increasing y-dimension straightness requirements. In various implementations, any one or more of affine transformations, distortion corrections, and/or simple summations are used to combine the multiple images into a single enhanced image for RTA. In various implementations, the multiple images are captured as reduced power images. In various implementations, capturing the multiple images of the same tile enables effectively resampling shot noise multiple times, thereby providing, in some scenarios, an improved estimate of an underlying signal. In some implementations, the multiple TDI sensors are configured as sub-pixel sensors via hardware-based subpixel offsets along a scan direction, enabling information available to an AI model and in turn enabling improved reconstruction quality and/or enhancement. In various implementations, the multiple TDI sensors are configured along offsets in various dimensions (e.g., unrelated to a scan direction) such as any of the x, y, or z dimensions. In some implementations, the multiple TDI sensor images are aligned via one or more image alignment tools. In some implementations, the multiple TDI sensor images are aligned via an AI model enabled to reconstruct a signal enhanced image of the same tile as imaged in the multiple TDI sensor images.

**In** the figure, the green circle indicates a field-of-view (FOV) of a sample with respect to an imager. The blue lines represent an illumination profile used to illuminate the sample. In some implementations, the illustrated multiband TDI imaging corresponds to lower peak power required and mitigated spec requirements relative to imaging with fewer and/or respectively taller bands (in the dimension of the scan direction).

**In** some implementations, each TDI band corresponds to a respective color filter. For example, two colors are distinguished using two sensors each with a different color filter. For another example, 10 sensors each with a different color filter are used. For a contrasting example, 10 sensors with two types of color filters are used. In some implementations, each TDI band corresponds to a respective focal plane, enabling acquiring an entire z-stack in one scan. In some situations, various implementations with a focal plane per TDI band enable efficient processing of defocus and/or flow cell tilt.

## Claims

1. A method of reducing excitation power used to produce fluorescence and collected images during sequencing, the method comprising:
accessing a training set of paired images (122, 124) taken at an unreduced power level and a reduced power level used to excite fluorescence during a sequencing operation;
wherein a power reduction ratio between the unreduced power level, before reduction, and the reduced power level, after reduction, is at least 2 to 1;
training a convolutional neural network (130) comprising a generative adversarial network that has a generator stage (132) and a discriminator stage (134) each updating respective pluralities of parameters during the training, the plurality of parameters of the generator stage enabling substantially recovering enhanced images (150), as if taken at the unreduced power level, from unenhanced images (126) taken at the reduced power level, after reduction;
whereby trained filters of the convolutional neural network (130) enable adding information to images (126) taken at the reduced power level to enable production of the enhanced images (150); and
saving the trained filters for use in processing collected images (126) from sequencing at the reduced power level.

2. The method of claim 1, wherein the sequencing operation has a plurality of imaging cycles, and wherein the paired images (122, 124) are taken at every cycle of the plurality of imaging cycles.

3. The method of claim 1, wherein the sequencing operation has a plurality of imaging cycles, and wherein the paired images (122, 124) are taken at less than every cycle of the plurality of imaging cycles.

4. The method of claim 1, wherein the generator stage (132) provides candidate enhanced images (138) to the discriminator stage (134).

5. The method of claim 1, wherein the convolutional neural network (130) is a training convolutional neural network, and the generator stage (132) is a training generator stage, and further comprising accessing production images (126) taken at the reduced power level and using information (142) of the trained filters in a production convolutional neural network that has a production generator stage to enhance the production images as if taken at the unreduced power level.

6. The method of claim 1, further comprising creating collected images (122, 124) at the unreduced and the reduced power levels by controlling excitation power produced by one or more lasers (304) and used to produce fluorescence.

7. The method of claim 1, wherein the reduced power level is controlled by using an acousto-optic modulator positioned in a transmission path between a laser source and a slide on which samples are sequenced.

8. The method of claim 1, further comprising creating collected images at the unreduced and the reduced power levels by controlling a number of photons reaching a sensor from a slide on which samples are sequenced, so that samples for the unreduced and the reduced power levels are collected in a single cycle of sequencing by synthesis.

9. The method of claim 1, further comprising creating collected images (122, 124) at the unreduced and the reduced power levels by collecting a first sample for the unreduced power level from a slide and synthetically impairing the first sample to produce a second sample.

10. The method of claim 1, further comprising base calling from the enhanced images (150).

11. The method of claim 1, wherein the convolutional neural network (130) comprises any combination of any one or more of
one or more 1D convolutional layers,
one or more 2D convolutional layers,
one or more 3D convolutional layers,
one or more 4D convolutional layers,
one or more 5D convolutional layers,
one or more multi-dimensional convolutional layers,
one or more single channel convolutional layers,
one or more multi-channel convolutional layers,
one or more 1 x 1 convolutional layers,
one or more atrous convolutional layers,
one or more transpose convolutional layers,
one or more depthwise separable convolutional layers,
one or more pointwise convolutional layers,
one or more 1 x 1 convolutional layers,
one or more group convolutional layers,
one or more flattened convolutional layers,
one or more spatial convolutional layers,
one or more spatially separable convolutional layers,
one or more cross-channel convolutional layers,
one or more shuffled grouped convolutional layers,
one or more pointwise grouped convolutional layers,
one or more upsampling layers,
one or more downsampling layers,
one or more averaging layers, and
one or more padding layers.

12. The method of claim 1, wherein the training comprises determining one or more loss terms comprising any combination of any one or more of a logistic regression/log loss, a multi-class cross-entropy/softmax loss, a binary cross-entropy loss, a mean squared error loss, a mean absolute error loss, a mean absolute percentage error loss, a mean squared logarithmic error loss, an L1 loss, an L2 loss, a smooth L1 loss, a Huber loss, a patch-based loss, a pixel-based loss, a pixel-wise loss, a single-image loss, adversarial loss, and a fiducial-based loss.

13. The method of claim 1, wherein the convolutional neural network (130) is a training convolutional neural network comprised in a training sequencing by synthesis instrument and further comprising training a production convolutional neural network comprised in a production sequencing by synthesis instrument, the training the production convolutional neural network starting with information of the trained filters and updating parameters of the production convolutional neural network based on processing fiducial elements of tuning images obtained via the production sequencing by synthesis instrument and wherein the tuning images are taken at the reduced power level.

14. The method of claim **1,** wherein the sequencing by synthesis comprises a plurality of cycles, each cycle corresponding to a single base call for each of a plurality of oligos, each cycle occurring one after another sequentially, and the training is performed with respect to a plurality of contiguous non-overlapping ranges of the cycles, resulting in a plurality of trained filters each corresponding to a respective one of the non-overlapping cycle ranges.

15. The method of claim 1, further comprising determining image quality of the enhanced images, and responsive to the quality being below a threshold, recapturing one or more of the images taken at the reduced power level using the unreduced power level.

## Patentansprüche

1. Verfahren zum Reduzieren der Anregungsleistung, die zum Erzeugen von Fluoreszenz und gesammelten Bildern während des Sequenzierens verwendet wird, wobei das Verfahren Folgendes umfasst:
Zugreifen auf einen Trainingssatz aus gepaarten Bildern (122, 124), die bei einem nicht reduzierten Leistungsniveau und einem reduzierten Leistungsniveau, die zum Anregen von Fluoreszenz während eines Sequenzierungsvorgangs verwendet werden, aufgenommen werden;
wobei ein Leistungsreduktionsverhältnis zwischen dem nicht reduzierten Leistungsniveau vor der Reduktion und dem reduzierten Leistungsniveau nach der Reduktion mindestens 2 zu 1 beträgt;
Trainieren eines faltungsneuronalen Netzes (130), das ein generatives adversariales Netzwerk umfasst, das eine Generatorstufe (132) und eine Diskriminatorstufe (134) aufweist, die jeweils während des Trainierens eine Vielzahl von Parametern aktualisieren, wobei es die Vielzahl von Parametern der Generatorstufe ermöglicht, verbesserte Bilder (150) im Wesentlichen derart wiederherzustellen als wären sie auf dem nicht reduzierten Leistungsniveau aufgenommen worden, aus nicht verbesserten Bildern (126), die auf dem reduzierten Leistungsniveau aufgenommen werden, nach der Reduktion;
wodurch es trainierte Filter des faltungsneuronalen Netzes (130) ermöglichen, Bildern (126), die mit dem reduzierten Leistungsniveau aufgenommen wurden, Informationen hinzuzufügen, um die Erzeugung der verbesserten Bilder (150) zu ermöglichen; und
Speichern der trainierten Filter zur Verwendung beim Verarbeiten gesammelter Bilder (126) aus dem Sequenzieren auf dem reduzierten Leistungsniveau.

2. Verfahren nach Anspruch 1, wobei der Sequenzierungsvorgang eine Vielzahl von Bildgebungszyklen aufweist und die gepaarten Bilder (122, 124) in jedem Zyklus der Vielzahl von Bildgebungszyklen aufgenommen werden.

3. Verfahren nach Anspruch 1, wobei der Sequenzierungsvorgang eine Vielzahl von Bildgebungszyklen umfasst und wobei die gepaarten Bilder (122, 124) in weniger als jedem Zyklus der Vielzahl von Bildgebungszyklen aufgenommen werden.

4. Verfahren nach Anspruch 1, wobei die Generatorstufe (132) der Diskriminatorstufe (134) verbesserte Kandidatenbilder (138) bereitstellt.

5. Verfahren nach Anspruch 1, wobei es sich bei dem faltungsneuronalen Netz (130) um ein faltungsneuronales Netz für Training und bei der Generatorstufe (132) um eine Trainingsgeneratorstufe handelt, und das weiter den Zugriff auf Produktionsbilder (126), die mit reduzierter Leistung aufgenommen werden, und die Verwendung von Informationen (142) der trainierten Filter in einem faltungsneuronalen Netz für Produktion mit einer Produktionsgeneratorstufe aufweist, um die Produktionsbilder so zu verbessern als würden sie mit nicht reduzierter Leistung aufgenommen.

6. Verfahren nach Anspruch 1, das weiter Erzeugen gesammelter Bilder (122, 124) bei dem nicht reduziertem und dem reduziertem Leistungsniveau durch Steuern der Anregungsleistung umfasst, die von einem oder mehreren Lasern (304) erzeugt und zum Erzeugen von Fluoreszenz verwendet wird.

7. Verfahren nach Anspruch 1, wobei das reduzierte Leistungsniveau unter Verwendung eines akustooptischen Modulators gesteuert wird, der in einem Übertragungspfad zwischen einer Laserquelle und einem Objektträger, auf dem Proben nacheinander sequenziert werden, positioniert ist.

8. Verfahren nach Anspruch 1, das weiter Schaffen gesammelter Bilder auf dem nicht reduzierten und dem reduzierten Leistungsniveau durch Steuern einer Anzahl von Photonen umfasst, die einen Sensor von einem Objektträger, auf dem die Proben sequenziert werden, derart erreichen, dass Proben für nicht reduzierte und reduzierte Leistungsniveau in einem einzigen Sequencing-by-Synthesis-Zyklus gesammelt werden.

9. Verfahren nach Anspruch 1, das weiter Schaffen gesammelter Bilder (122, 124) auf dem nicht reduzierten und dem reduzierten Leistungsniveau durch Sammeln einer ersten Probe für das nicht reduzierte Leistungsniveau von einem Objektträger und synthetisches Beeinträchtigen der ersten Probe zum Erzeugen einer zweiten Probe umfasst.

10. Verfahren nach Anspruch 1, das weiter den Basenaufruf aus den verbesserten Bildern (150) umfasst.

11. Verfahren nach Anspruch 1, wobei das faltungsneuronale Netz (130) eine beliebige Kombination aus einem oder mehreren umfasst von:
einem oder mehreren 1D-Convolutional-Layers,
einem oder mehreren 2D-Convolutional-Layers,
einem oder mehreren 3D-Convolutional-Layers,
einem oder mehreren 4D-Convolutional-Layers,
einem oder mehreren 5D-Convolutional-Layers,
einem oder mehreren mehrdimensionalen Convolutional-Layers
einem oder mehreren Single-Channel-Convolutional-Layers,
einem oder mehreren Multi-Channel-Convolutional-Layers,
einem oder mehreren 1×1-Convolutional-Layers,
einem oder mehreren Atrous-Convolutional-Layers,
einem oder mehreren Transpose-Convolutional-Layers,
einem oder mehreren Depthwise-Separable-Convolutional-Layers,
einer oder mehreren Pointwise-Convolutional-Layers,
einem oder mehreren 1×1-Convolutional-Layers,
einem oder mehreren Group-Convolutional-Layers,
einem oder mehreren Flattened-Convolutional-Layers,
einem oder mehreren Spatial-Convolutional-Layers,
einem oder mehreren Spatially-Separable-Convolutional-Layers,
einem oder mehreren Cross-Channel-Convolutional-Layers,
einem oder mehreren Shuffled-Grouped-Convolutional-Layers,
einem oder mehreren Pointwise-Grouped-Convolutional-Layers,
einem oder mehreren Upsampling-Layers,
einem oder mehreren Downsampling-Layers,
einem oder mehreren Averaging-Layers und
einem oder mehreren Padding-Layers.

12. Verfahren nach Anspruch 1, wobei das Trainieren Bestimmen eines oder mehrerer Verlustterme umfasst, die eine beliebige Kombination aus einem oder mehreren von einem Logistic-Regression-/Log-Loss, einem Multi-Class-Cross-Entropy-/Softmax-Loss, einem Binary-Cross-Entropy-Loss, einem Mean-Squared-Error-Loss, einem Mean-Absolute-Error-Loss, einem Mean-Absolute-Percentage-Error-Loss, einem Mean-Squared-Logarithmic-Error-Loss, einem L1-Loss, einem L2-Loss, einem Smooth-L1-Loss, einem Huber-Loss, einem Patch-basierten Loss, einem Pixel-basierten Loss, einem Pixelweisen Loss, einem Single-Image-Loss, einem Adversarial-Loss sowie einem Fiducialbasierten Loss umfassen.

13. Verfahren nach Anspruch 1, wobei es sich bei dem faltungsneuronalen Netz (130) um ein faltungsneuronales Netz für Trainieren handelt, das in einem Training-Sequencing-by-Synthesis-Instrument enthalten ist, und weiter das Training eines faltungsneuronalen Netzes für Produktion umfasst, das in einem Production-Sequencing-by-Synthesis-Instrument enthalten ist, wobei das Training des faltungsneuronalen Netzes für Produktion mit Informationen der trainierten Filter beginnt und die Parameter des faltungsneuronalen Netzes für Produktion basierend auf dem Verarbeiten von Fiducial-Elementen aus Tuning-Bildern aktualisiert, die mittels des Production-Sequencing-by-Synthesis-Instruments erhalten werden und wobei die Tuning-Bilder bei dem reduzierten Leistungsniveau aufgenommen werden.

14. Verfahren nach Anspruch 1, wobei das Sequencing-by-Synthesis eine Vielzahl von Zyklen umfasst, wobei jeder Zyklus einem einzigen Basenaufruf für jedes einer Vielzahl von Oligos entspricht, wobei jeder Zyklus sequenziell nacheinander eintritt und das Training in Bezug auf eine Vielzahl zusammenhängender, einander nicht überlappender Bereiche der Zyklen durchgeführt wird, was eine Vielzahl trainierter Filter ergibt, von denen jeder einem der einander nicht überlappenden Zyklusbereiche entspricht.

15. Verfahren nach Anspruch 1, das weiter das Bestimmen der Bildqualität der verbesserten Bilder und, als Reaktion darauf, dass die Qualität unterhalb eines Schwellenwerts liegt, das erneute Aufnehmen eines oder mehrerer der bei reduziertem Leistungsniveau aufgenommenen Bilder unter Verwendung des nicht reduzierten Leistungsniveaus umfasst.

## Revendications

1. Procédé de réduction d'une puissance d'excitation utilisée pour produire une fluorescence et collecter des images lors d'un séquençage, le procédé comprenant :
l'accès à un ensemble d'entraînement d'images appariées (122, 124) prises à un niveau de puissance non réduit et à un niveau de puissance réduit utilisé pour exciter la fluorescence lors d'une opération de séquençage ;
dans lequel le rapport de réduction de puissance entre le niveau de puissance non réduit, avant réduction, et le niveau de puissance réduit, après réduction, est d'au moins 2 à 1 ;
l'entraînement d'un réseau neuronal convolutif (130) comprenant un réseau antagoniste génératif qui présente un étage de générateur (132) et un étage de discriminateur (134) mettant chacun à jour des pluralités respectives de paramètres pendant l'entraînement, la pluralité de paramètres de l'étage de générateur permettant de récupérer sensiblement des images améliorées (150), comme si elles avaient été prises au niveau de puissance non réduit, à partir d'images non améliorées (126) prises au niveau de puissance réduit, après réduction ;
selon lequel des filtres entraînés du réseau neuronal convolutif (130) permettent d'ajouter des informations à des images (126) prises au niveau de puissance réduit afin de permettre la production des images améliorées (150) ; et
la sauvegarde des filtres entraînés pour une utilisation dans le traitement des images collectées (126) issues du séquençage au niveau de puissance réduit.

2. Procédé selon la revendication 1, dans lequel l'opération de séquençage présente une pluralité de cycles d'imagerie, et dans lequel les images appariées (122, 124) sont prises à chaque cycle de la pluralité de cycles d'imagerie.

3. Procédé selon la revendication 1, dans lequel l'opération de séquençage présente une pluralité de cycles d'imagerie, et dans lequel les images appariées (122, 124) sont prises à moins de chaque cycle de la pluralité de cycles d'imagerie.

4. Procédé selon la revendication 1, dans lequel l'étage générateur (132) fournit des images améliorées candidates (138) à l'étage discriminateur (134).

5. Procédé selon la revendication 1, dans lequel le réseau neuronal convolutif (130) est un réseau neuronal convolutif d'entraînement, et l'étage de générateur (132) est un étage de générateur d'entraînement, et comprenant en outre l'accès à des images de production (126) prises au niveau de puissance réduit et l'utilisation d'informations (142) des filtres entraînés dans un réseau neuronal convolutif de production qui présente un étage de générateur de production pour améliorer les images de production comme si elles avaient été prises au niveau de puissance non réduit.

6. Procédé selon la revendication 1, comprenant en outre la création d'images collectées (122, 124) aux niveaux de puissance non réduit et réduit en commandant la puissance d'excitation produite par un ou plusieurs lasers (304) et utilisée pour produire une fluorescence.

7. Procédé selon la revendication 1, dans lequel le niveau de puissance réduit est commandé à l'aide d'un modulateur acousto-optique positionné dans un trajet de transmission entre une source laser et une lame sur laquelle des échantillons sont séquencés.

8. Procédé selon la revendication 1, comprenant en outre la création d'images collectées aux niveaux de puissance non réduit et réduit en commandant un nombre de photons atteignant un capteur à partir d'une lame sur laquelle des échantillons sont séquencés, de sorte que des échantillons pour les niveaux de puissance non réduit et réduit soient collectés en un seul cycle de séquençage par synthèse.

9. Procédé selon la revendication 1, comprenant en outre la création d'images collectées (122, 124) aux niveaux de puissance non réduit et réduit en collectant un premier échantillon pour le niveau de puissance non réduit à partir d'une lame et en altérant synthétiquement le premier échantillon pour produire un second échantillon.

10. Procédé selon la revendication 1, comprenant en outre l'appel de base à partir des images améliorées (150).

11. Procédé selon la revendication 1, dans lequel le réseau neuronal convolutif (130) comprend toute combinaison d'un ou plusieurs parmi :
une ou plusieurs couches convolutives 1D,
une ou plusieurs couches convolutives 2D,
une ou plusieurs couches de convolution 3D,
une ou plusieurs couches convolutives 4D,
une ou plusieurs couches convolutives 5D,
une ou plusieurs couches convolutives multidimensionnelles,
une ou plusieurs couches convolutives à canal unique,
une ou plusieurs couches convolutives multicanaux,
une ou plusieurs couches convolutives 1×1,
une ou plusieurs couches convolutives à trous,
une ou plusieurs couches convolutives transposées,
une ou plusieurs couches convolutives séparables en profondeur,
une ou plusieurs couches convolutives point par point,
une ou plusieurs couches convolutives 1×1,
une ou plusieurs couches convolutives de groupe,
une ou plusieurs couches convolutives aplaties,
une ou plusieurs couches convolutives spatiales,
une ou plusieurs couches convolutives spatialement séparables,
une ou plusieurs couches convolutives inter-canaux,
une ou plusieurs couches convolutives groupées et mélangées,
une ou plusieurs couches convolutives groupées point par point,
une ou plusieurs couches de suréchantillonnage,
une ou plusieurs couches de sous-échantillonnage,
une ou plusieurs couches de moyennage, et
une ou plusieurs couches de remplissage.

12. Procédé selon la revendication 1, dans lequel l'entraînement comprend la détermination d'un ou plusieurs termes de perte comprenant toute combinaison d'une ou plusieurs parmi une perte de régression/logarithmique logistique, une perte d'entropie croisée/softmax de classes multiples, une perte d'entropie croisée binaire, une perte d'erreur quadratique moyenne, une perte d'erreur absolue moyenne, une perte d'erreur absolue moyenne en pourcentage, une perte d'erreur logarithmique quadratique moyenne, une perte L1, une perte L2, une perte L1 lissée, une perte Huber, une perte basée sur des patchs, une perte basée sur des pixels, une perte pixel par pixel, une perte sur une seule image, une perte antagoniste et une perte basée sur un repère.

13. Procédé selon la revendication 1, dans lequel le réseau neuronal convolutif (130) est un réseau neuronal convolutif d'entraînement compris dans un instrument de séquençage d'entraînement par synthèse et comprenant en outre l'entraînement d'un réseau neuronal convolutif de production compris dans un instrument de séquençage de production par synthèse, l'entraînement du réseau neuronal convolutif de production commençant par des informations des filtres entraînés et mettant à jour des paramètres du réseau neuronal convolutif de production sur la base du traitement d'éléments de repère d'images de réglage obtenues via l'instrument de séquençage de production par synthèse et dans lequel les images de réglage sont prises au niveau de puissance réduit.

14. Procédé selon la revendication 1, dans lequel le séquençage par synthèse comprend une pluralité de cycles, chaque cycle correspondant à un seul appel de base pour chacun d'une pluralité d'oligos, chaque cycle se produisant l'un après l'autre de manière séquentielle, et l'entraînement est réalisé par rapport à une pluralité de plages contiguës non chevauchantes des cycles, engendrant une pluralité de filtres entraînés correspondant chacun à l'une respective des plages de cycles non chevauchantes.

15. Procédé selon la revendication 1, comprenant en outre la détermination d'une qualité d'image des images améliorées et, en réponse au fait que la qualité est inférieure à un seuil, la recapture d'une ou plusieurs des images prises au niveau de puissance réduit en utilisant le niveau de puissance non réduit.
